# EUROPEAN PATENT SPECIFICATION

(11) **EP 4 370 748 B1**
(45) Date of publication and mention of the grant of the patent: **23.07.2025**
(21) Application number: 22747383.2
(22) Date of filing: 12.07.2022
(51) Int. Cl.: E02B 17/00, E21B 41/00, B63C 11/52, B08B 9/023, B08B 3/02, B62D 57/024

(54) **APPARATUS FOR SERVICING A STRUCTURE**
VORRICHTUNG ZUR WARTUNG EINER STRUKTUR
APPAREIL D'ENTRETIEN D'UNE STRUCTURE

(30) Priority: 13.07.2021 GB 202110101
(43) Date of publication of application: 22.05.2024
(73) Proprietor: Rototech Pte Ltd., Singapore 118518 (SG)
(72) Inventor: THANGARAJAN, Dinesh, Kajang, Selagor, 43000 (MY); HARTOG, Simon, Singapore 118518 (SG)
(74) Representative: Cross, James Peter Archibald
(86) International application number: PCT/GB2022/051809
(87) International publication number: WO 2023/285814

(56) References cited:
- CN-A- 108 555 940
- GB-A- 2 542 605
- US-A- 4 893 512

## Description

### Field of the Invention

The present invention relates to apparatus for servicing a structure, such as a support structure including but not limited to marine support structures such as risers, conductors, caissons piles, or legs for marine platforms, jetties or wharves, or pipes, and land-based or offshore structures such as wind turbine towers.

### Background of the Invention

Marine support structures typically suffer from ageing and degradation, particularly in the 'splash zone', which is the part of the structure that is periodically covered and uncovered by water, for example as a result of tidal range, wave action and/or splashing. Ageing may include corrosion and physical damage caused by wave action and impacts. Degradation may include accumulation of marine growth, such as weed, barnacles etc.

Marine support structures therefore need to be serviced, for example by cleaning, inspection, and coating or painting, to ensure continued performance and to extend their life. Conventionally, servicing is carried out by divers but this can be extremely difficult and hazardous, particularly in the splash zone, and is often not fully effective.

WO-A-2020/096529 discloses apparatus for servicing a structure, comprises cage or frame that carries drive wheels or rollers from driving the frame along the structure and/or tools for servicing the structure. The frame comprises at least two parts connected together by a hinge, so that the frame can be opened to fit around the structure to be serviced, and closed to secure the frame or cage around the structure. A plurality of such frames or cages may be connected together in series around the structure.

Structures may include obstacles to the passage of a servicing apparatus along the structure. For example, marine support structures may have clamps attached thereto for fitting structural parts such as cross-braces.

Various solutions have been proposed to this problem. For example, WO-A-2019/144227 discloses an apparatus in the form of an open ring that rotates around the structure so that the obstacle passes through the opening in the ring. GB-A-2531893 discloses a similar approach; additionally, the apparatus has drive rollers that can be lifted away from the structure in order to 'step over' small obstacles. The 'open ring' solution requires rotation of the whole apparatus around the structure, which can cause tangling of hydraulic hoses or cables connected to the apparatus.

In another example, EP-A-2600051 discloses an apparatus comprising collar segments that can be separated so as to pass over a flange on a pipe. This arrangement is not suitable for passing over obstacles such as cross-braces that extend away from a pipe.

There is a need for a simpler and more effective approach to passing large obstacles when servicing structures, including not only marine and offshore structures, but also land-based structures such as wind turbine towers.
US 4 893 512 A relates to a piping examination apparatus for the maintenance and inspection of a number of closely clustered pipes. More particularly, the disclosure relates to a swing-type automatic examination apparatus for automatically examining piping while "walking" across the narrow spaces between pipes.
CN 108 555 940 A relates to the crawling device applied to a rod-shaped article, and more particularly to a crawling robot and a climbing structure thereof.
GB 2 542 605 A relates to remotely-operated subsea tools and to methods for moving such tools along elongate members of offshore structures.

### Statements of the Invention

Aspects of the invention are defined by the accompanying claims.

According to one embodiment, there is provided a bypass module for connection in series between first and second drive and/or servicing modules, each of which may be selectively closed around an elongate structure to be serviced, or opened to move away from the structure to be serviced, wherein the bypass module is actuable to move the first and second modules relative to each other in a direction perpendicular to the elongate structure, so that one of the modules is moved away from the structure while the other is closed around the structure. In this way, by arranging a train of drive and servicing modules with bypass modules therebetween, the train may bypass an obstacle on the structure by moving one or more modules in turn away from the structure, driving the one or more modules past the structure, then moving the one or more modules back towards the structure and closing them around the structure.

The or each drive and/or servicing module may be selectively opened and closed by a drive, such as a hydraulic ram or electric motor, mounted on the structure of the drive/servicing module. In this way, a drive which is used to attach the drive/servicing module to the structure may be actuated to allow the drive/servicing module to pass an obstacle on the structure, and no additional drive to open and close is required in the bypass module. The bypass module may include movable or pivotable mounting parts to allow the first and/or second drive/servicing modules to open and close.

The or each drive module is configured to drive along the structure, for example by means of drive wheels or rollers in contact with the structure. The or each servicing module may comprise one or more tools for servicing the structure. A combined drive and servicing module may combine the functions of the drive module and the servicing module.

The drive/servicing modules may each comprise a cage or frame comprising two or more segments or sections movably or pivotably connected together, for example by one or more hinges, so that cage or frame may be closed around the structure and opened to allow removal from the structure.

The cage or frame may comprise upper and lower supports connected together by axial struts. The upper and/or lower supports may have connecting parts for connecting to corresponding connecting parts on the bypass module. Drive and/or servicing parts may be mounted between the upper and lower supports, so as not to project beyond the upper and lower supports and interfere with the bypass module. There may be an intermediate support between the upper and lower supports, for mounting the drive and/or servicing parts.

### Brief Description of the Drawings

Specific embodiments of the present invention will now be described with reference to the accompanying drawings, in which:
Figure 1 is a perspective view from above of an apparatus in a first example;
Figure 2 is a first side elevation of the apparatus of the first example;
Figure 3 is a second side elevation of the apparatus of the first example, orthogonal to the first side elevation;
Figure 4 is a cross-section through the plane A-A in Figure 2, indicating the position of a support structure;
Figure 5 is a top view of the apparatus of the first example;
Figure 6 is a perspective view from above of an apparatus in a second example;
Figure 7 is a perspective view from below of the apparatus of the second example;
Figure 8 is a first side elevation of the apparatus of the second example;
Figure 9 is a second side elevation of the apparatus of the second example, orthogonal to the first side elevation;
Figure 10 is a cross-section in the plane A-A in Figure 9;
Figure 11 is a cross-section in the plane B-B in Figure 9;
Figure 12 is a top view of the apparatus of the second example;
Figure 13 is a view of a kit of parts for assembly to form apparatus according to the first or second example;
Figure 14 is a diagram of the operations of an apparatus in the examples;
Figure 15 is a diagram of part of a hydraulic system of an apparatus in the examples;
Figure 16 is a diagram illustrating a remote control system for operating an apparatus in the examples;
Figure 17 is a first side elevation of an apparatus in a third example;
Figure 18 is a second side elevation of the apparatus of the third example, orthogonal to the first side elevation;
Figure 19 is a perspective view from above of the apparatus of the third example;
Figure 20 is a bottom view of the apparatus of the third example;
Figure 21 is a top view of the apparatus of the third example;
Figure 22 is a partial cross-sectional view in the plane A-A of Figure 21;
Figure 23 is a diagram showing different configurations of the apparatus of the third example as a traction module, with additional modules;
Figure 24 shows a detailed view of a connection system between modules in the configurations of Figure 23;
Figure 25 is a side elevation of an apparatus in a fourth example;
Figure 26 is a perspective view of apparatus in a first embodiment of the invention, for connection between modules to allow the modules to pass an obstruction;
Figure 27 is a plan view of the first embodiment, in a closed position;
Figure 28 is a plan view of the first embodiment, in a partially open position;
Figure 29 is a plan view of the first embodiment in a fully open position, shown in relation to a pipe having a cross-brace;
Figure 30 is a flow chart showing a method of operation of the first embodiment;
Figures 31 - 41 are perspective views showing the operation of the first embodiment at the respective steps of the flow chart;
Figures 42 and 43 are perspective views from above and below of a section of a drive module in a second embodiment; and
Figures 44 and 45 are exploded and assembled perspective views respectively of a pin or block for securing a bypass module to a drive and/or servicing module in the second embodiment.

### Detailed Description of Embodiments

In the description below, the orientation of the apparatus will be described as assembled around a vertically elongate support structure 30. 'Circumferential' and 'tangential' refers to a circumference around a notional central vertical axis, and 'radial' to a direction perpendicular to that axis.

Where dimensions are shown in the drawings, these are given in millimetres. The dimensions are not limiting on the size of specific embodiments and are provided purely by way of example.

For clarity, not all instances of a particular part are indicated by reference numerals in the drawings. It will be understood by inspection of the drawings as a whole which parts are referred to. Similar parts between different embodiments are indicated by the same reference numeral.

An embodiment of the invention is designed for use with apparatus for servicing a structure as disclosed in WO 2020/096529, examples of which are described below. However, the present invention is not limited to use with those examples.

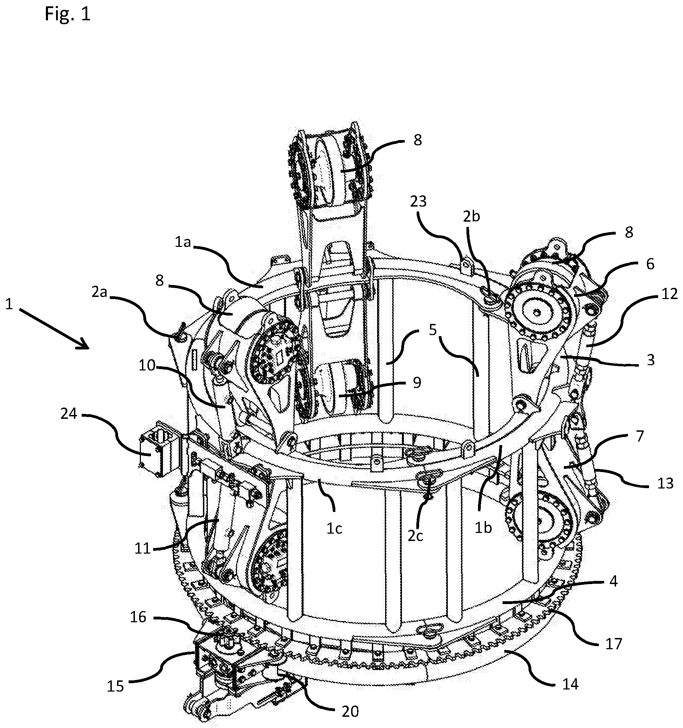

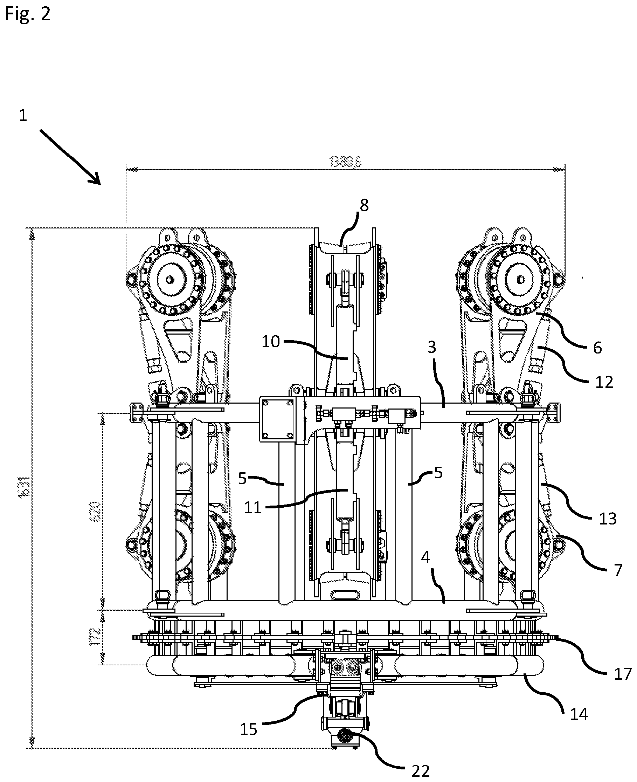

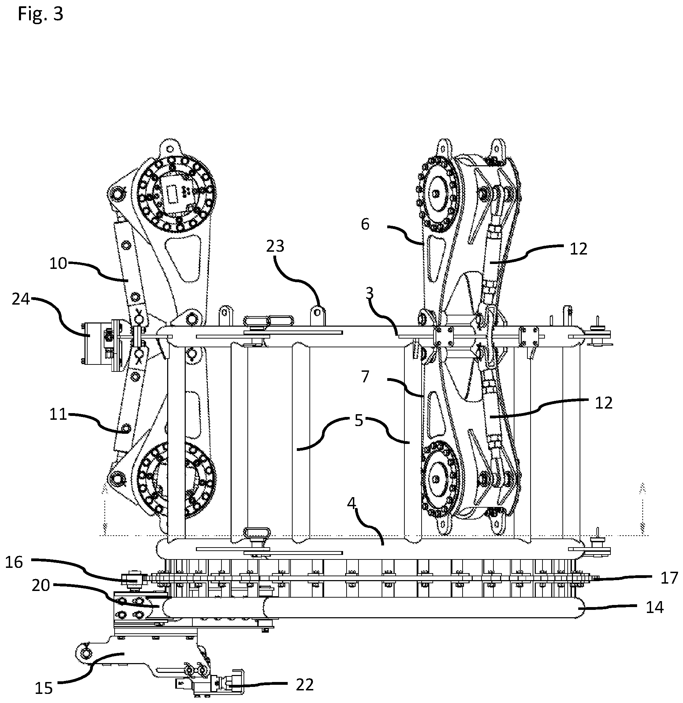

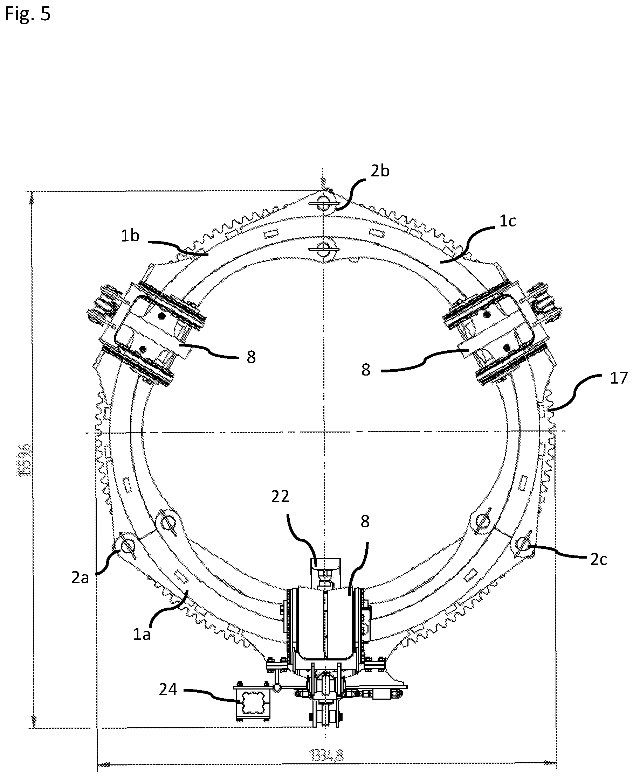

A first example is described below with reference to Figures 1 to 5. A cage or frame 1 comprises cage or frame segments or sections 1a, 1b, 1c which are removably connected together at frame connection points 2a, 2b, 2c, for example using removable pins. In use, the frame segments 1a, 1b, 1c are assembled around the support structure 30 to be serviced. The frame segments 1a, 1b, 1c include lifting points 23 for attachment of cables or the like, for lifting the frame segments 1a, 1b, 1c into position and/or for retrieving them after use. Preferably, each frame segment 1a, 1b, 1c is light enough to be manually lifted into position.

The frame 1 comprises an upper support 3 and a lower support 4, interconnected by struts 5. In this example, the upper and lower supports 3, 4 are circular in shape, and coaxial. The struts 5 extend generally vertically between the upper and lower supports 3, 4. The upper support 3, lower support 4 and struts 5 are preferably substantially rigid and are connected together so that the frame 1, when assembled, is substantially rigid.

A plurality of (in this case 3) pairs of upper and lower arms 6, 7 are connected to the upper support 3 at different circumferential positions, preferably evenly circumferentially spaced around the upper support 3, for example by 120° in this example.

Each arm 6, 7 is pivotally connected to the upper support 3 about a tangential, horizontal pivot axis, for example by means of a respective axle or spindle. In this example, the arms 6, 7 are pivotable about respective axes on the upper and lower sides of the upper support 3, but may alternatively be pivotable about the same axis. The upper and lower arms 6, 7 are pivotable in opposite directions relative to each other so that they can both simultaneously move towards the support structure 30 or away from the support structure 30. The upper and lower arms 6, 7 may be pivotable independently of each other, so that the angle between the upper and lower arms 6, 7 may vary.

Each arm 6, 7 carries a respective wheel, roller or other rotating member 8, 9 arranged to contact the support structure 30. The wheels 8, 9 may have contact surfaces arranged to enhance traction against the support structure 30 and/or to reduce wear to the wheels 8, 9. Each pair of wheels 8, 9, carried by a corresponding pair of arms 6, 7, may be mutually independently rotatable.

At least one of the pairs of arms 6, 7 are reciprocally driveable to pivot towards and away from the support structure 30 so that the corresponding wheels 8, 9 respectively clamp and release the support structure 30. Preferably, this pair of arms 6, 7 is driven by respective hydraulic cylinders 10, 11. The control of the hydraulic cylinders 10, 11 may be interconnected so that the pair of arms is driven in synchronism. The hydraulic cylinders 10, 11 may be supplied by respective hydraulic hoses (not shown), secured by a hose clamp 24.

Others of the pairs of arms 6, 7 may be adjustably held in a pivotal position, for example by adjustable length bars or bottle screws 12, 13, according to the diameter of the support structure 30 to be serviced.

The lower arms 7 are arranged to pass between the struts 5 to enable the corresponding wheels 9 to contact the support structure 30.

At least one of the wheels 8, 9 is driveable reciprocally in either one of opposite directions (e.g. forward and backward) so as to move the apparatus respectively up and down the support structure 30. Preferably, the driveable wheel(s) 8, 9 are provided on the reciprocally driveable arms 6, 7. Others of the wheels 8, 9 may not be driven, but may freely rotate, preferably independently of each other, so as to act as guides for movement of the apparatus up and down the support structure 30.

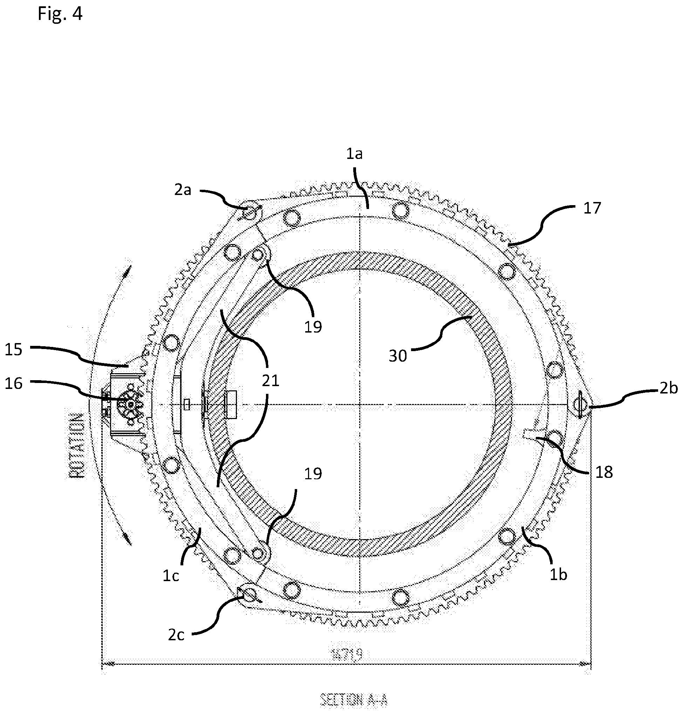

The lower support 4 supports a guide rail 14 for guiding a carriage 15 circumferentially around the lower part of the frame 1. The carriage 15 has a drive gear 16 that engages a gear track 17 arranged circumferentially and horizontally around the lower part of the frame 1. The drive gear 16 is driven so that the carriage 15 moves circumferentially around the guide rail 14. The carriage 15 may be driveable circumferentially through approximately 360°, but preferably the movement of the carriage 15 is limited to one complete rotation by a carriage stop 18 provided adjacent the guide rail 14, as shown in Figure 4.

The carriage 15 preferably does not contact the support structure 30, as accumulation on the support structure 30 could impede the progress of the carriage 15. Instead, the carriage 15 is supported by a pair of inner rollers 19 that contact an inner side of the guide rail 14, and a pair of outer rollers 20 that contact an outer side of the guide rail 14. The inner rollers 19 are mounted on respective carriage arms 21 that extend horizontally to either side of the carriage 15, for improved stability.

In an alternative example, the functions of the guide rail 14 and the gear track 17 may be combined. For example, the gear track 17 and drive gear 16 could be omitted and one or more of the inner or outer rollers 19, 20 may be driven so as the drive the carriage 15 around the guide rail 14. Alternatively, the guide rail 14 may be omitted and the gear track 17 modified so as to provide a guiding function. Instead of a gear/gear track or rack and pinion arrangement, an alternative linear drive arrangement may be used, such as a roller pinion or friction drive.

The carriage 15 is arranged to carry one or more tools 22 for servicing the support structure 30. By moving the frame 1 up and down the support structure 30 using the driveable wheel(s) 8, 9, and moving the carriage 15 circumferentially around the support structure 30, the tool(s) 22 may reach substantially any part of the external surface of the support structure 30, at least within the splash zone and subject to any restrictions due to hydraulic lines and the like.

The tool(s) 22 may be moveably mounted on the carriage 15, to allow movement of the tool(s) 22 relative to the carriage 15. For example, the tool(s) 22 may be reciprocally driveable towards and away from the support structure 30, for example in a radial direction.

Examples of the tool(s) that may be mounted either singly or together on the carriage 15, and which may be interchangeable, include:
- a high-pressure water nozzle for cleaning the surface of the support structure 30
- a wall thickness measuring probe for measuring the wall thickness of the support structure 30, for example using ultrasound
- a video camera 27 for inspection of the servicing site
- a clearance sensor for sensing clearance from the surface of the support structure
- a painting tool, such as a paint roller or brushes, for painting the surface of the support structure 30
- a wrapping tool for applying a protective wrapping to the support structure 30
- a cutting tool for cutting a part of the support structure 30, for example using high-pressure abrasive cutting.

In the second example, the carriage 15 carries a camera 27, such as a video camera, in addition to a cleaning tool 22.

The apparatus may include one or more distance sensors, to determine the distance travelled along the support structure 30. The distance sensor(s) may for example determine the number of rotations of the wheel(s) 8, 9, for example by using one or more optical or magnetic angular position sensors.

The carriage 15 may include one or more rotational position sensors (e.g. optical or magnetic sensors) able to detect an absolute or relative circumferential position of the carriage 15 relative to the frame 1, for example by detecting reference position markings on the guide rail 14 or the gear track 17.

The distance sensor(s) and/or rotational position sensors (s) may be used to determine the position of the tool 22, carriage 15 or another part of the apparatus on the support structure 30. This may allow the apparatus to travel to a predetermined absolute position or to return to a previously visited position, for example where an anomaly or discrepancy has been detected.

The apparatus may be aligned with one or more reference marks on the support structure 30, to allow the apparatus to return to a previously visited position relative to the reference marks. In one example, a horizontal and/or vertical visible mark is made on the support structure 30 corresponding to an initial position of one or more parts of the apparatus, such as the vertical position of the upper support 3 and the circumferential position of a predetermined one of the struts 5, identified for example by a marking such as a distinguishing paint marking. The distance sensor(s) is set to zero. The carriage 15 is to its maximum circumferential position (either clockwise or anti-clockwise), and the rotational position sensor(s) is set to zero. As the apparatus moves along the support structure 30, the distance sensor(s) and rotational position sensor(s) measure the distance travelled in an axial and circumferential direction relate to the initial position. This enables the position of any anomaly or discrepancy on the support structure to be mapped and returned to, if required.

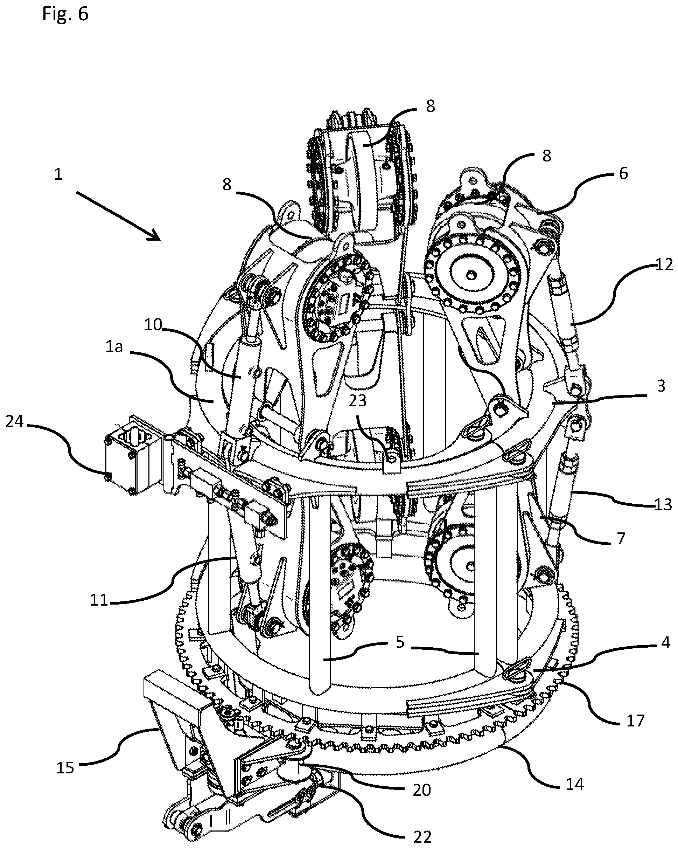

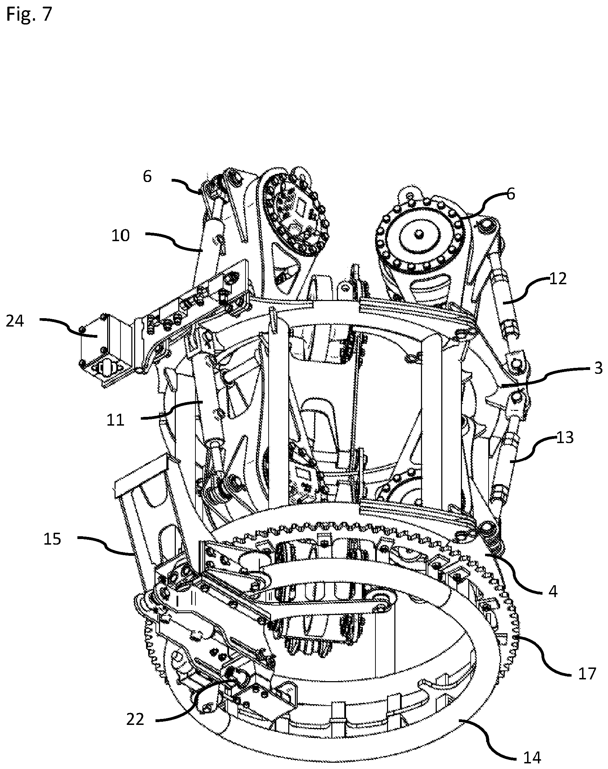

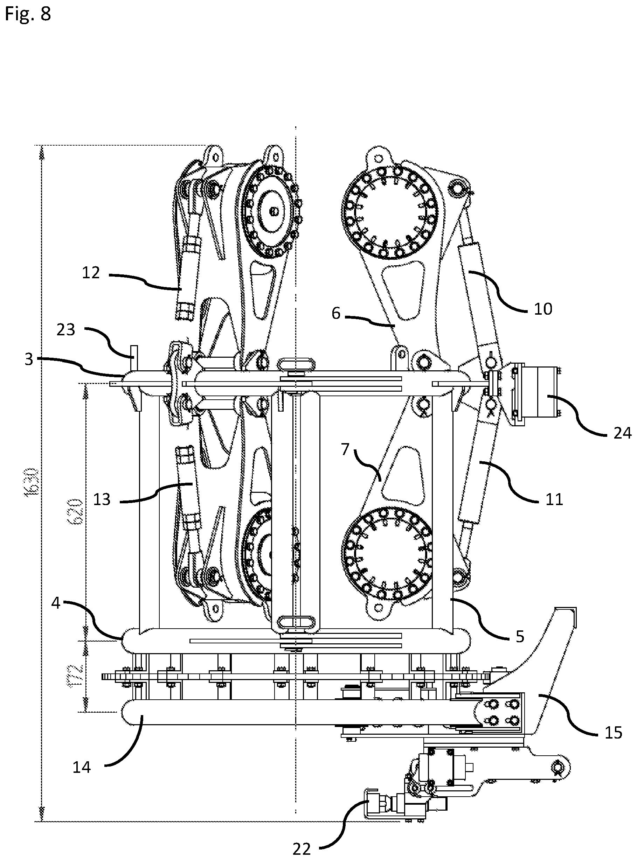

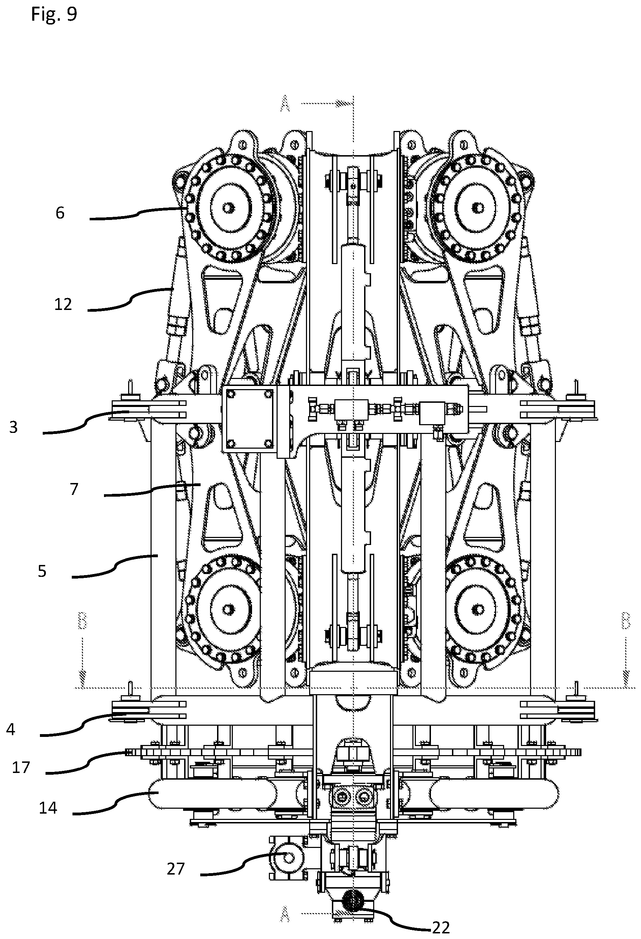

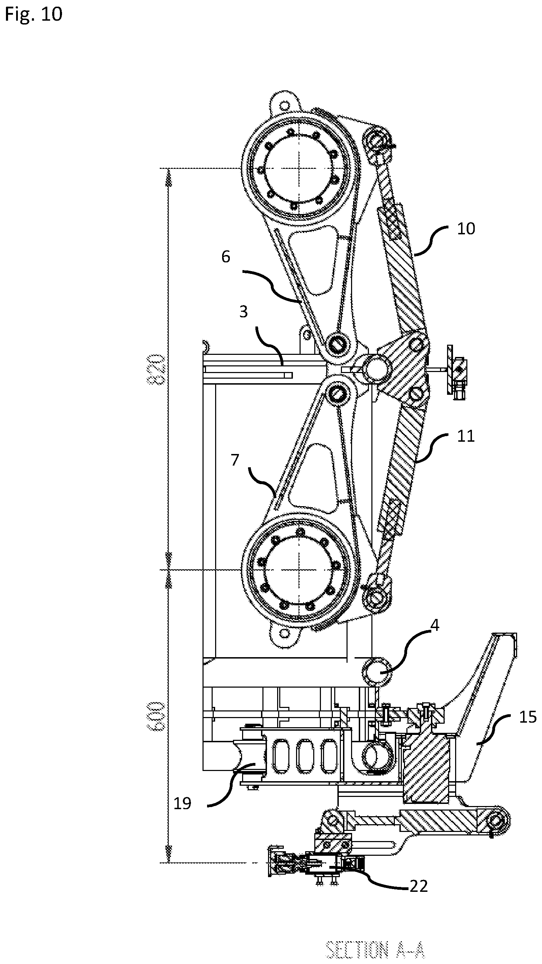

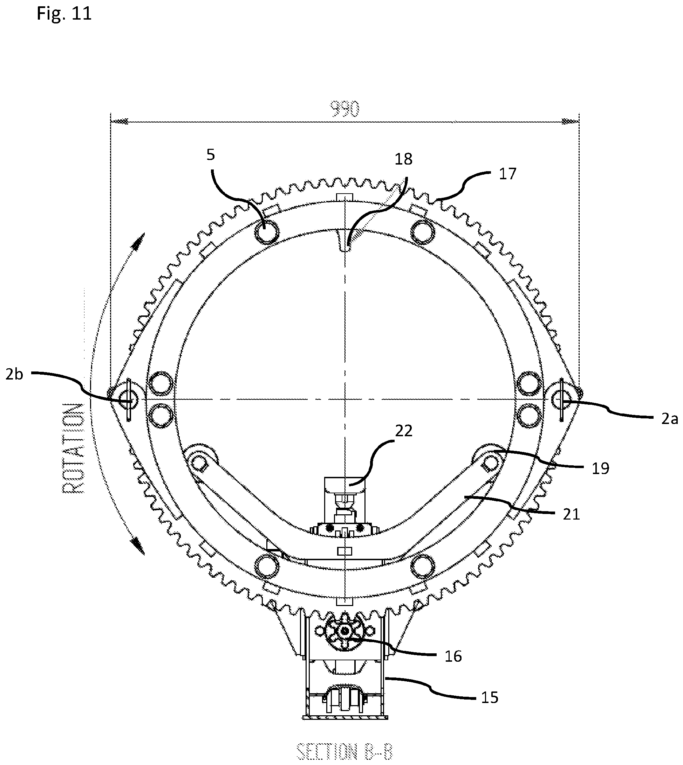

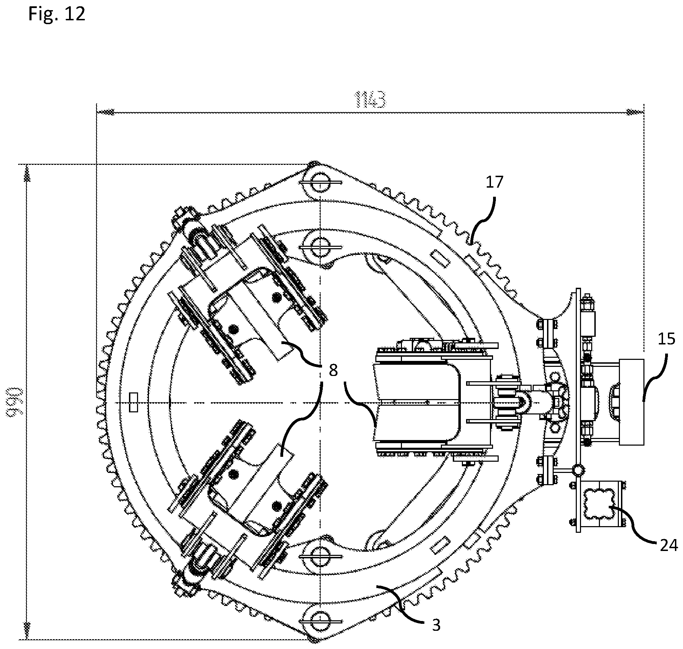

The first example is designed to service support structures 30 with a diameter in the range 22 - 36 inches (0.56-0.91 metres). Alternative examples of different sizes and/or numbers of frame segments 1a, 1b, 1c may be provided to service support structures of other diameters. For example, Figures 6 to 12 show a second example which is similar in construction to the first example but has a frame 1 of smaller diameter designed to service a support structure 30 with a diameter in the range 9⅝ - 22 inches (0.24 - 0.56 metres). The frame 1 comprises two frame segments 1a, 1b, which are semi-cylindrical and are assembled together to form a cylindrical frame 1.

The second example has three pairs of upper and lower arms 6, 7 as in the first example, evenly spaced around the upper support 3. In other examples, particularly those designed for servicing support structures of larger diameter, there may be more than three pairs of arms 6, 7.

The arms 6, 7, together with the wheels 8, 9, hydraulic cylinders 10, 11 and adjustable length bars 12, 13, may be removably attached to the frame segments 1a, 1b, 1c. These components may then be interchangeably used with the frame segments 1a, 1b, 1c of the first example and the frame segments 1a, 1b of the second example. Different carriages 15 may be required for the first and second examples, due to the different radius of curvature. Alternatively, a single adjustable carriage 15 may be interchangeably used between the first and second examples, for example with adjustable carriage arms 21.

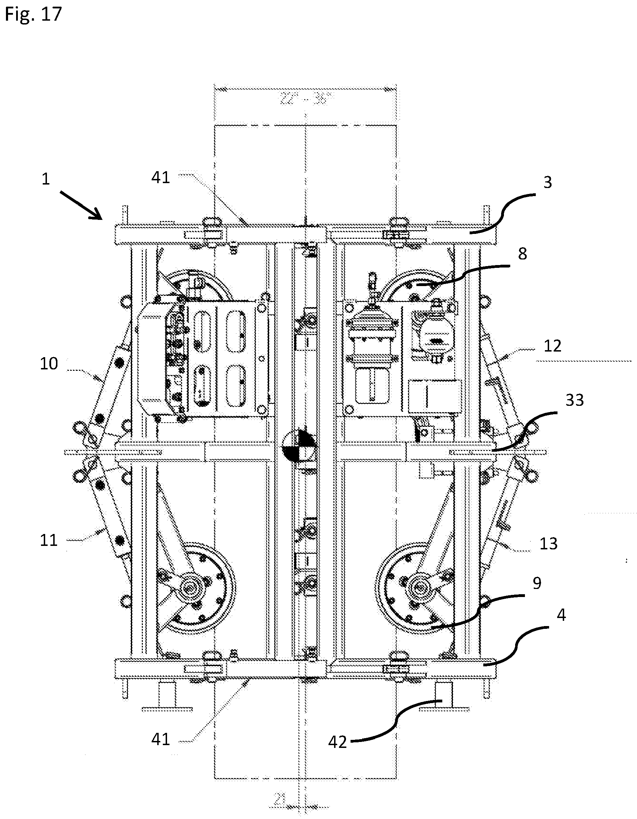

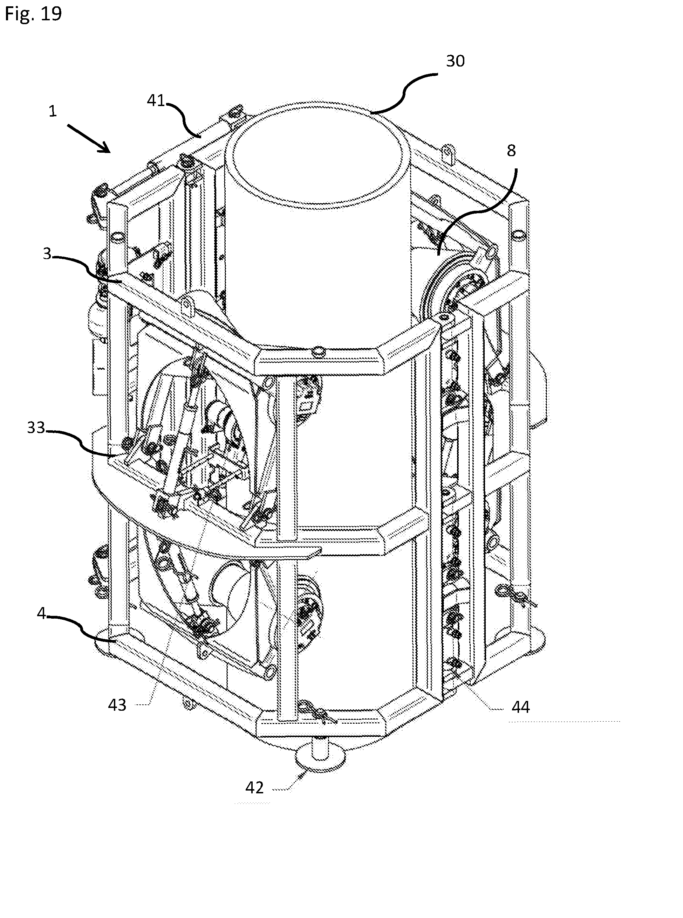

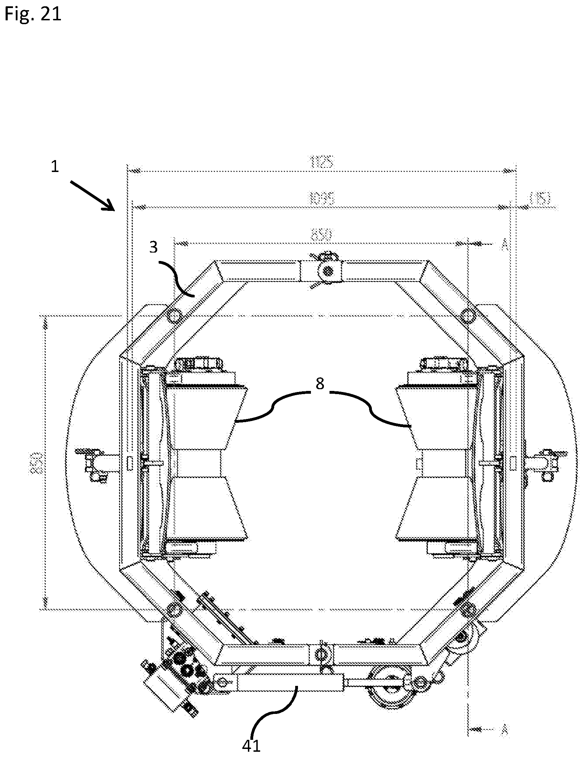

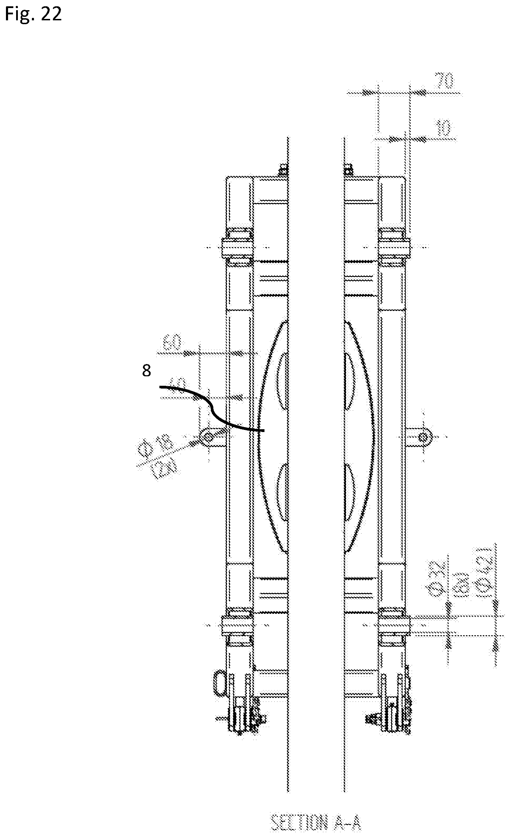

Figures 17 to 22 show an apparatus in a third example, which differs from the first and second examples in that the cage or frame 1 includes a middle support 33 to which two pairs of upper and lower arms 6, 7, carrying corresponding wheels 8, 9, are connected. Hence, the cage 1 comprises three annular horizontal pieces (lower support 3, middle support 33 and upper support 4) connected together by vertically extending struts 5 to form a generally cylindrical structure. Hence, the third example can be thought of as a development of the first and second examples in which the middle support 33 performs a similar function to the upper support 4 of the first and second examples, and the upper support 4 of the third example is an additional structural part that extends beyond the upper arms 6.

The cage 1 comprises two semi-cylindrical sections 1a, 1b hingedly connected together at connection points 2a, 2b, and lockable together, similarly to the second example. The cage in this example may designed in a larger version for fitting around structures 30 with a diameter of between 22 and 36 inches (0.56 - 0.91 m), or in a smaller version for structures 30 with a diameter of between 8 and 22 inches (0.20-0.56 m).

One pair of arms 6, 7 has a corresponding pair of actuating cylinders 10, 11, while the other pair of arms has a corresponding pair of adjustable length bars 12, 13. The wheels 8, 9 of at least one pair of arms 6, 7 are reciprocally drivable to as to move the apparatus up and down the structure 30.

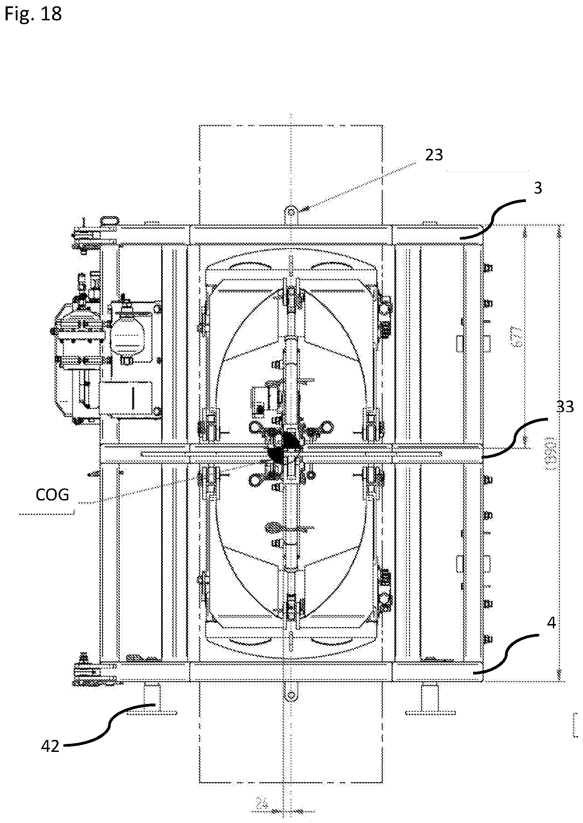

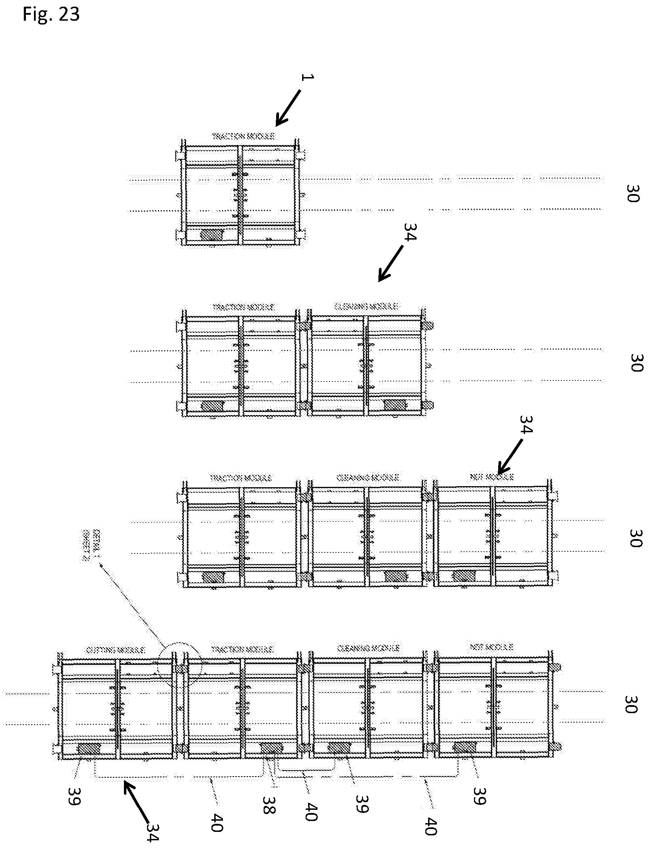

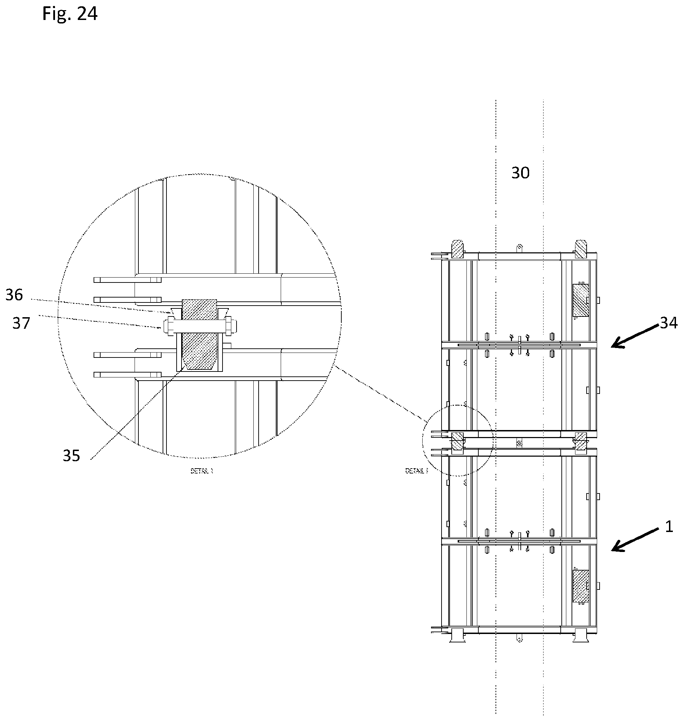

In this example, the apparatus has no guide rail 14 or carriage 15 for carrying tools 22. Hence, the centre of gravity (COG) is close to the geometric centre of the cage 1, as shown in Figures 17 and 18. As shown in Figures 23 and 24, the apparatus is configured as a traction module for connection in series along and around the structure 30 to one or more servicing modules 34, such as a cleaning module, NDT (non-destructive testing) module and/or cutting module. Each additional module comprises a cage or frame of similar construction to that of the traction module, and may comprise two or more pairs of arms 6, 7 with corresponding wheels 8, 9 similar to that of the traction module, except that none of the wheels 8, 9 of the additional module are driveable; instead the servicing modules 34 are driven along the structure 30 by the traction module. Alternatively, the one or more servicing modules may be moved along the structure 30 by some other means, such as one or more winches attached to the structure 30 or to a platform.

The distance travelled along the structure 30 may be measured by a measuring wheel 43 that is supported by the frame 1, for example by middle support 33, and is pivotable into contact with the structure 30. The measuring wheel may be an encoding wheel from which the distance travelled may be detected optically and/or electronically.

As shown in Figure 24, adjacent first and second modules may be connected together by one or more first docking parts on a first module that docks with a corresponding one or more second docking parts of the second module; for example, the first docking part(s) may comprise one or more male docking probes 35 and the second docking part(s) may comprise one or more receptacle(s) 36 into which the corresponding male docking probe(s) 35 fit. The connection may be secured by a locking system such as a quick release bolt 37 that passes through apertures in the male docking probe and the receptacle. Alternative docking and/or securing mechanisms may be used.

The traction module may have a plurality of feet 42 attached to the lower support 4. Preferably, the feet 42 are removable to allow connection of an additional module below the traction module.

The traction module includes a master controller 38 that is removably connectible by leads 40 to one or more corresponding slave controllers 39 on the one or more additional modules. The master controller 38 is controlled from the surface by the remote control unit 25, and passes communication signals and/or electrical power to the slave controllers 39.

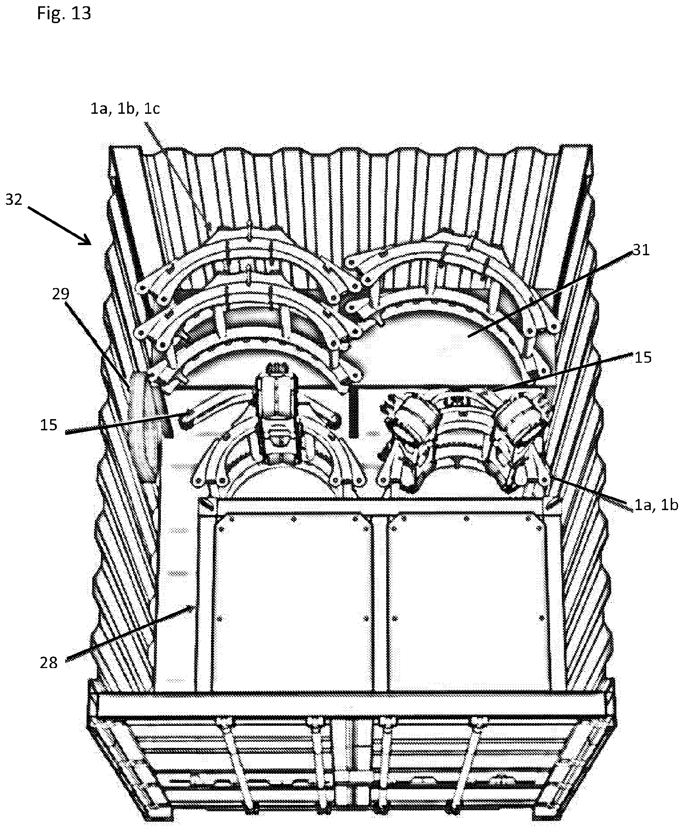

The components of any of the examples may be provided as a kit of parts. For example, Figure 13 shows a kit of parts that may be provided to allow apparatus of either the first or second example to be assembled, comprising at least the frame segments 1a, 1b, 1c of the first example, the frame segments 1a, 1b of the second example, the arms 6, 7, together with the wheels 8, 9, hydraulic cylinders 10, 11 and adjustable length bars 12, 13 (shown here attached to the frame segments 1a, 1b of the second example), carriages 15 for the first and second examples, a set of hydraulic hoses 29, and a hydraulic power supply 28. In this example, the kit of parts is provided in a transportable container 32 including a workbench 31, to facilitate partial assembly of the apparatus before assembly around the support structure 30.

In examples designed for support structures 30 of only one diameter, or a small range of diameters, some of the non-driven pairs of arms 6, 7 and wheels 8, 9 may be replaced by other types of guides, such as rollers or wheels of fixed radial position.

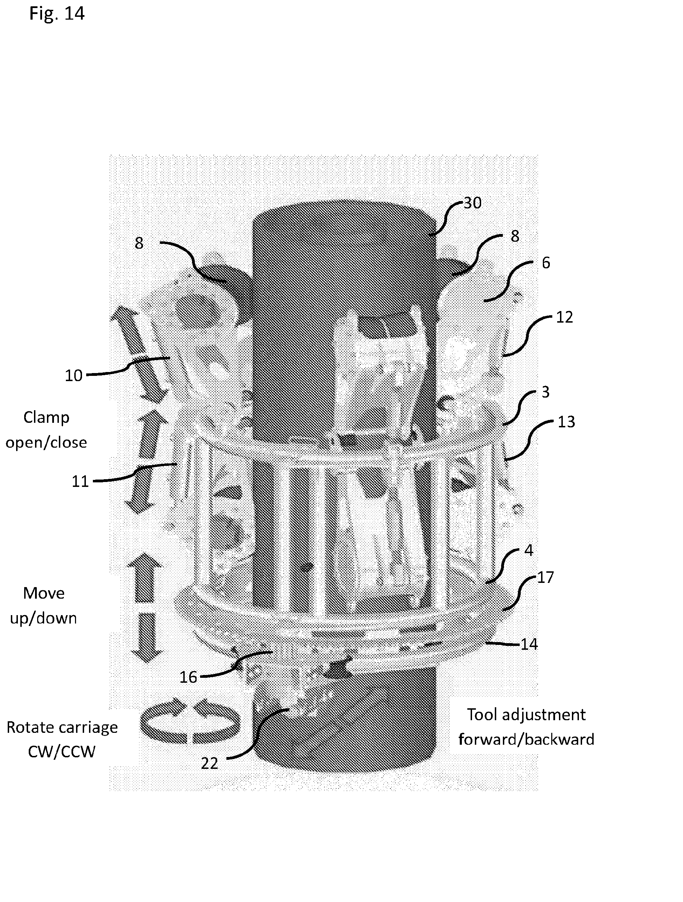

Figure 14 shows examples of driveable functions of the apparatus such as the examples as described above:
i. Clamp open/close, by driving the drivable pivotable upper and lower arms 6, 7 so as to pivot radially outwards/inwards respectively;
ii. Move up/down, by driving the drivable wheel(s) 8, 9 in contact with the surface of the support structure 30 in forward/reverse directions respectively;
iii. Rotate carriage clockwise/anticlockwise, by driving the drive gear 16 in forward/reverse direction respectively;
iv. Tool adjustment forward/backward, by driving the tool 22 radially forward/backward respectively, with respect to the carriage 15.

The driveable functions may be each be powered and/or controlled by hydraulic or electric power, for example by hydraulic hoses and/or electrical cables connected to the apparatus. Hydraulic power is preferable for at least some applications, for example in order to reduce the weight of the apparatus and/or to avoid the use of electricity in a marine environment. A hydraulic power unit may be mounted on a platform and connected to the apparatus by flexible hydraulic hoses.

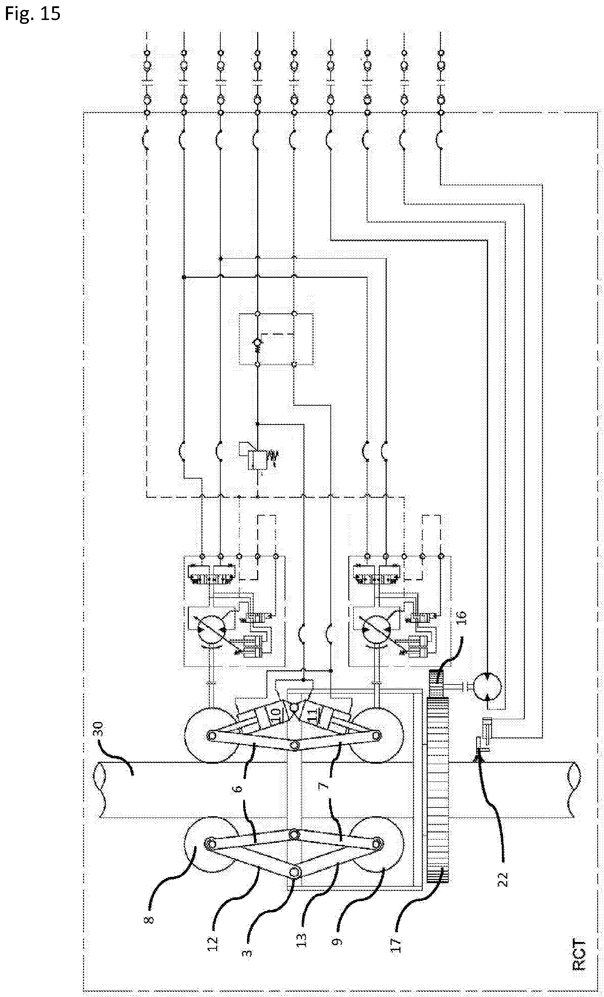

An example of a hydraulic drive system for the apparatus is shown in Figure 15, in which the pivoting of one of the pairs of arms 6, 7, the rotation of the corresponding wheels 8, 9, and in the case of the first and second examples, the rotation of the drive gear 16, and the reciprocal driving of the tool 22 are driven by separate hydraulic lines, connected to a hydraulic power unit (not shown).

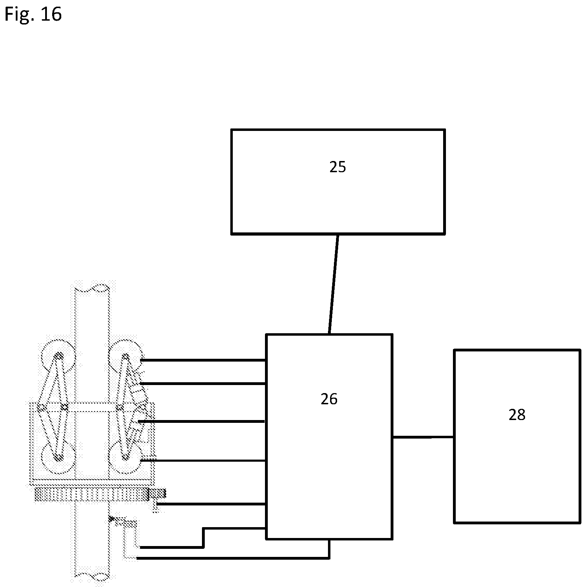

The apparatus is preferably controlled by a remote control unit 25, as shown for example in Figure 16, which allows control of some or all of the functions described above, preferably by means of corresponding user actuable controls. The remote control unit 25 may be connected by a wired or wireless connection to a controller 26 of the functions described above. Power for driving the functions may be provided by a power supply 28, under the control of the controller 26.

Preferably, the drive speeds of the wheels 8, 9 and of the drive gear 16 are controllable independently to adjust for the servicing required. Alternatively or additionally, the remote control unit 25 or controller 26 may be programmable or programmed to carry out a particular service by coordinated control of the different functions, optionally in response to the distance travelled as detected by the distance sensor(s), and/or the circumferential position of the carriage 15 as detected by the circumferential position sensor(s). This may enable a predetermined section of the support structure 30 to be serviced.

The pivot angle of the arms 6, 7 may be varied during use, for example to allow the apparatus to be driven up or down a sloping or curved support member.

The number of wheels 8, 9 that are powered may be varied according to the load to be carried by the apparatus or the operating conditions of the apparatus. The pivoting of more than one of the pairs of arms 6, 7 may be powered, depending on the adjustability or clamping force required.

Examples may be used for servicing tapering support structures, by varying the degree of pivoting of the arms 6, 7 to adjust for varying diameter as the apparatus moves up and down the support structure.

In an alternative example, the arms 6, 7 may be mounted on the lower support 4 and the guide rail 14 may be mounted on the upper support 3.

Preferably, the frame segments 1a, 1b, 1c are constructed of aluminium tube so as to be lightweight. For example, the mass of the apparatus, excluding hydraulic or electrical lines, may be in the range 200-300 kg.

For larger examples, the method of closure by removable pins may be replaced by a hydraulic closure method, in which two or more of the cage or frame segments 1a, 1b, 1c are connected together with hinged connections, actuated for example by hydraulic rams or cylinders 41, as shown for example in Figure 17. The segments 1a, 1b, 1c may be connected together on a suitable surface such as a floating pontoon or barge, supported for example by the feet 42. The hinged connections may be opened such that the cage or frame 1 fits around the support structure 30 to be serviced, then closed so as to secure the frame 1 around the structure 30. The segments 1a, 1b, 1c may be secured together by one or more locking mechanisms, such as locking cylinders 44, which may be hydraulically actuated.

The above examples are designed for servicing a circular cylindrical support structure 30 such as a pile, and therefore the frame 1 is approximately circular cylindrical, having an inner diameter slightly larger than the diameter of the support structure 30. Alternative examples may have alternative shapes and sizes to match the type of support structure 30 which they are designed to service. For example, a square or rectangular cylindrical frame 1, preferably with a pair of arms 5, 6 on each of the four sides, may be used in an example designed for servicing a square or rectangular cylindrical support structure 30.

The above examples may be used in a marine or aquatic splash zone, or at a shallow depth below the surface, such as 10 metres. The examples may be modified for operation below 10 metres in depth, for example by the use of suitable hydraulic seals. The examples may be used for servicing pipes, to the extent that they are not impeded by the support of the pipes.

Alternative examples may be used for servicing non-marine or on-shore support structures, such as wind turbines or radio masts. For these applications, the frame segments 1a, 1b, 1c may be provided with one or more detachable or permanently attached wheels for or other transport members, allowing the frame segments to be moved into position around the support structure, along the ground. For example, each frame segment 1a, 1b, 1c may have one or more wheels attached at each side and an additional removable wheel on a truss at the apex of a triangle formed by two wheels on the frame 1 and on the outside of the frame. The segments 1a, 1b, 1c may then be assembled or closed around the support structure 30, for example by means of removable pins or by the hydraulic rams as described above.

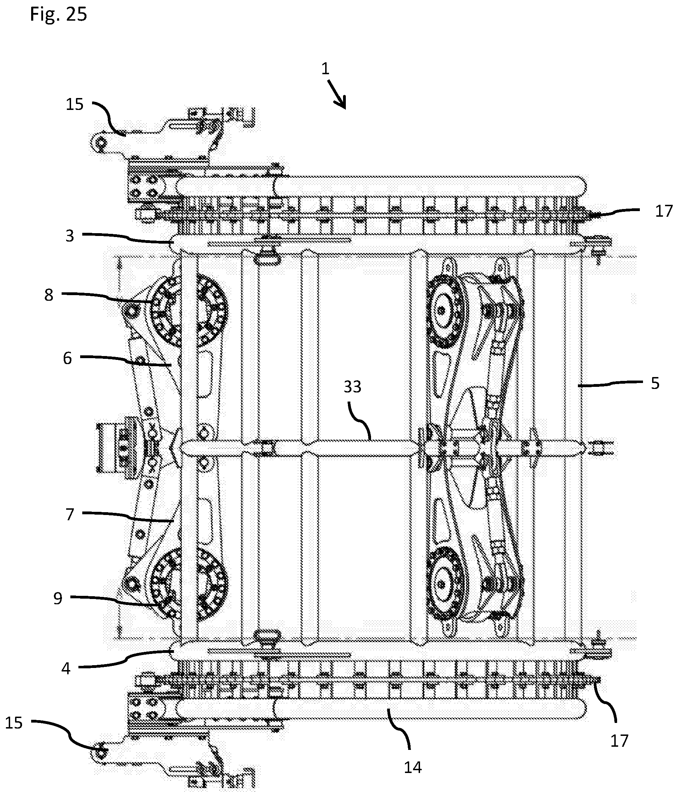

Figure 25 shows apparatus in a fourth example. This example has a frame 1 with upper and lower supports 3, 4 and a middle support 33 on which upper and lower arms 6, 7 carrying respective wheels 8, 9 as in the third example. The upper and lower arms 6, 7 are positioned between adjacent struts 5 and pass between the struts 5 so that the wheels 8, 9 can contact the structure.

As in the third example, the mounting of the upper and lower arms 6, 7 on the middle support leaves the upper and lower supports 3, 4 clear. This enables a guide rail 14 and gear track 17 carrying a tool carriage 15, similar to those of the first and second examples, to be mounted on each of the upper and lower supports 3, 4. This arrangement increases the capacity of the apparatus to carry tools on a single module.

The apparatus of the fourth example is particularly suitable for servicing the towers of wind turbines. The positions of the upper and lower arms 6, 7 may be controlled independently to accommodate a tapered tower.

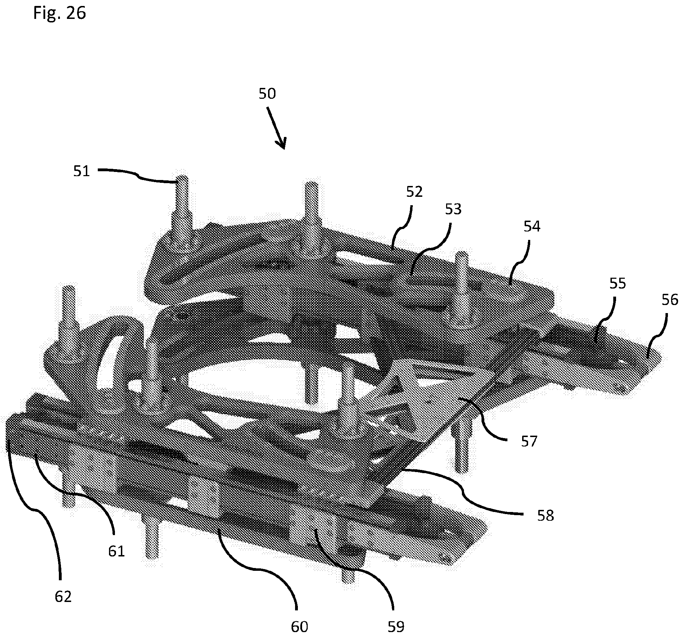

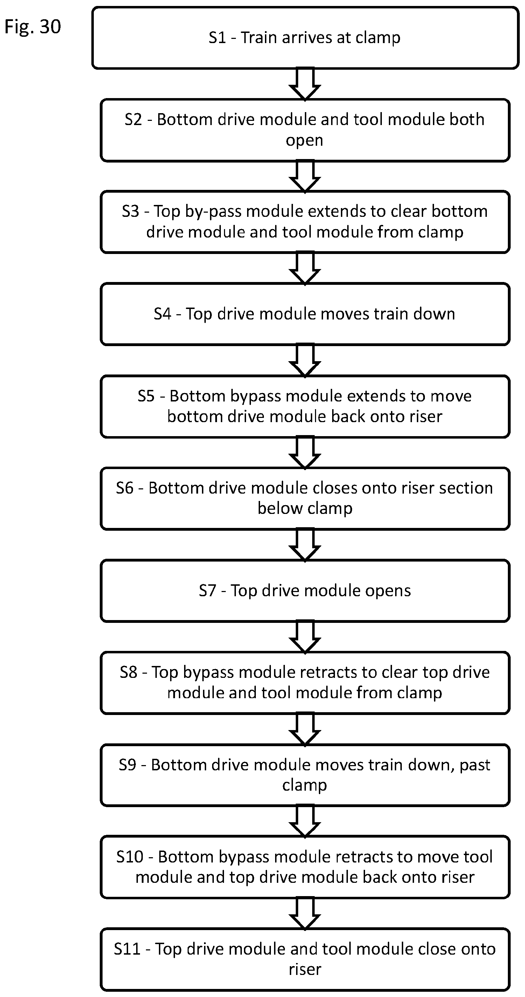

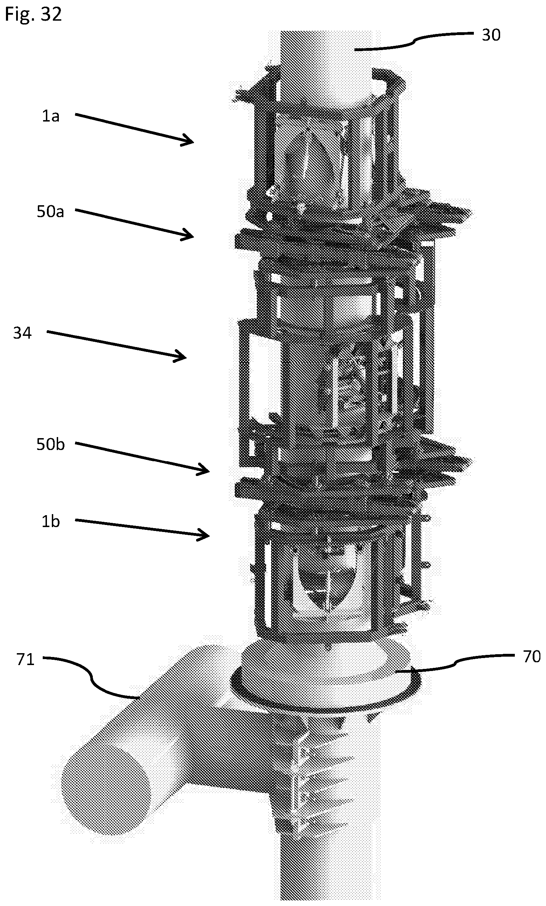

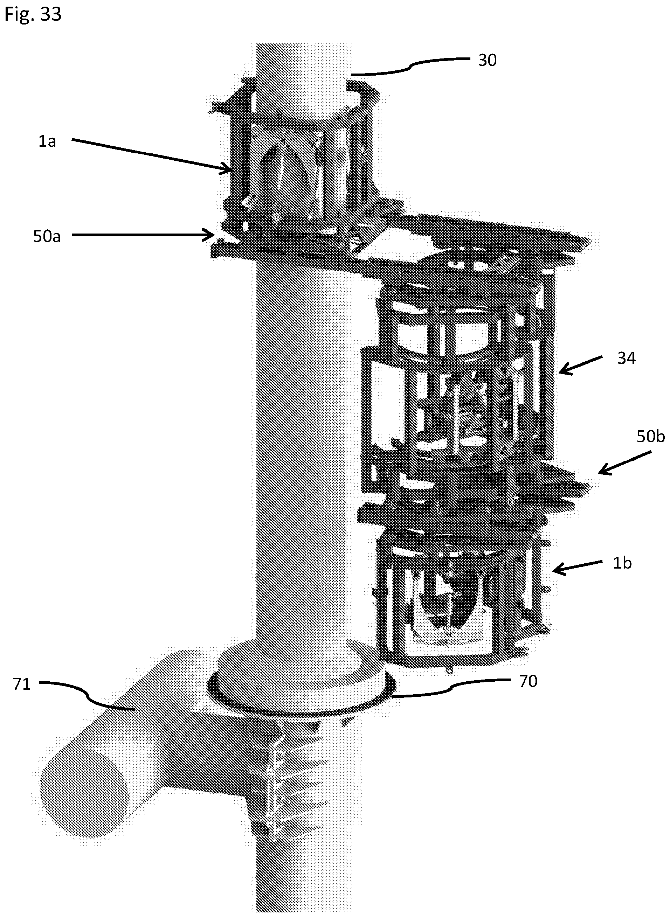

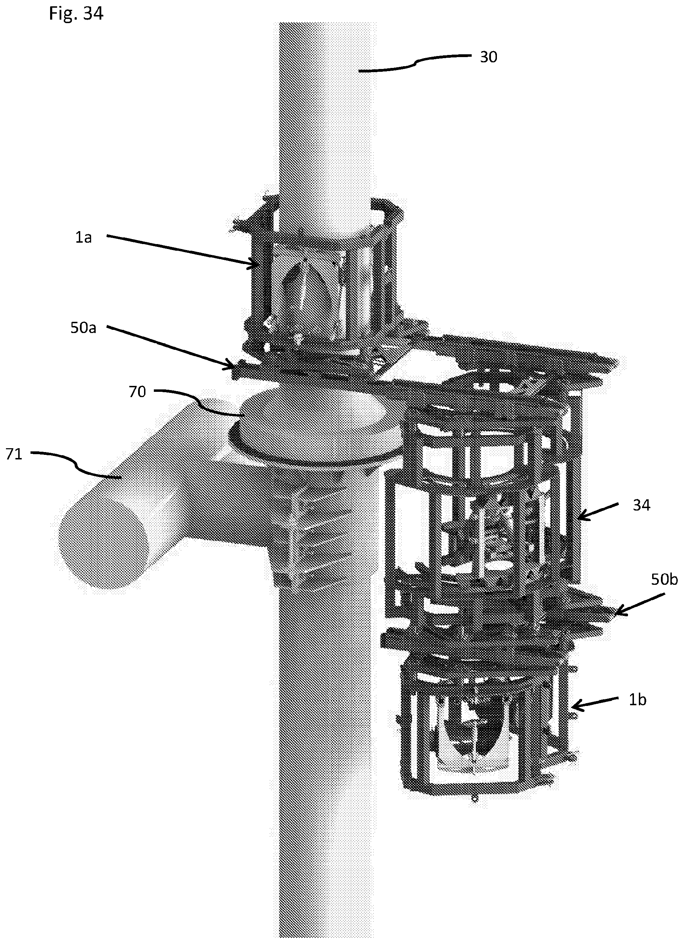

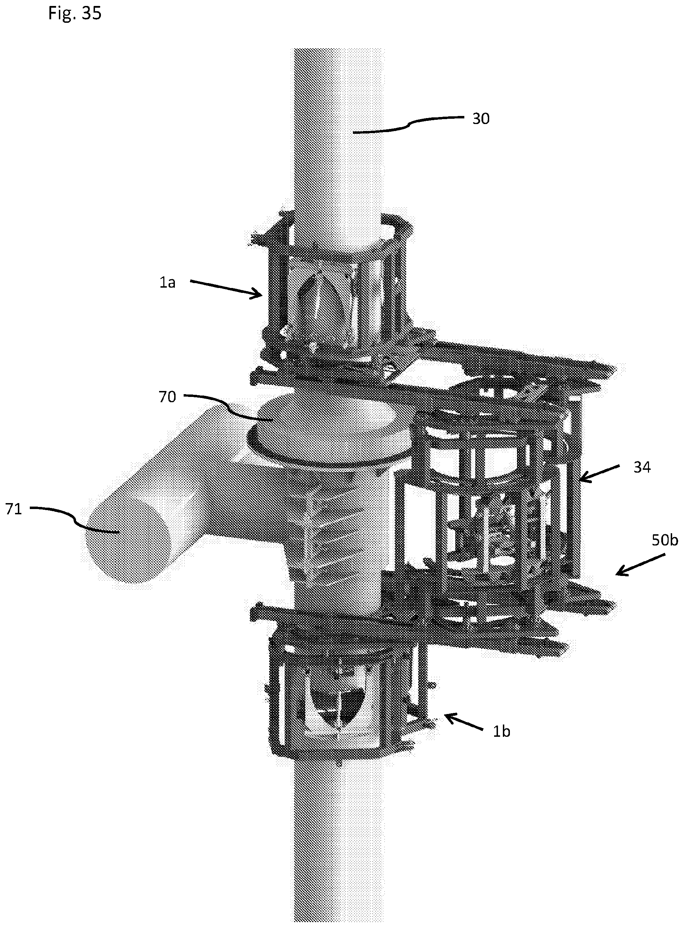

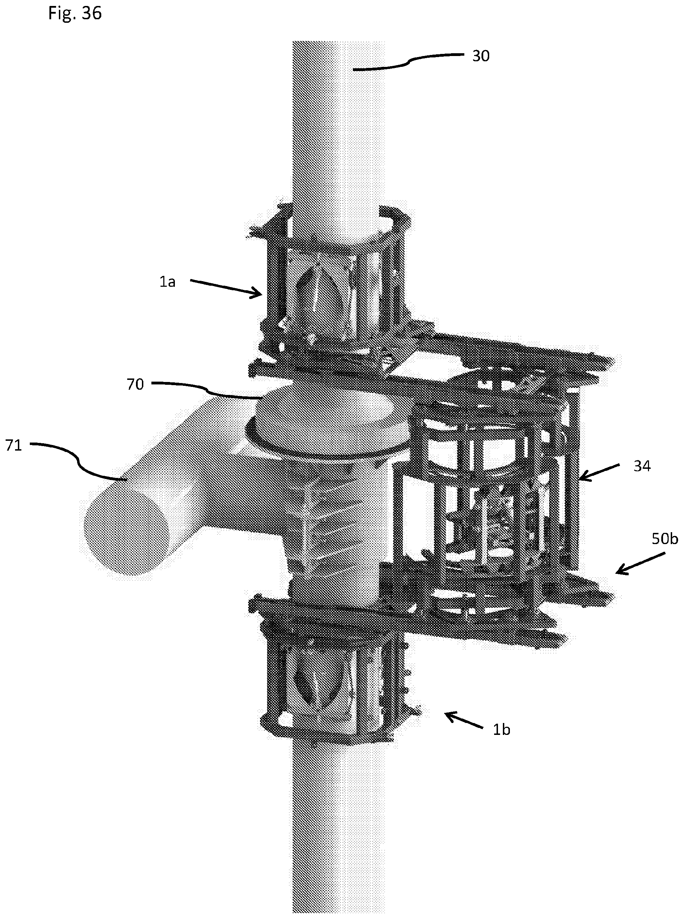

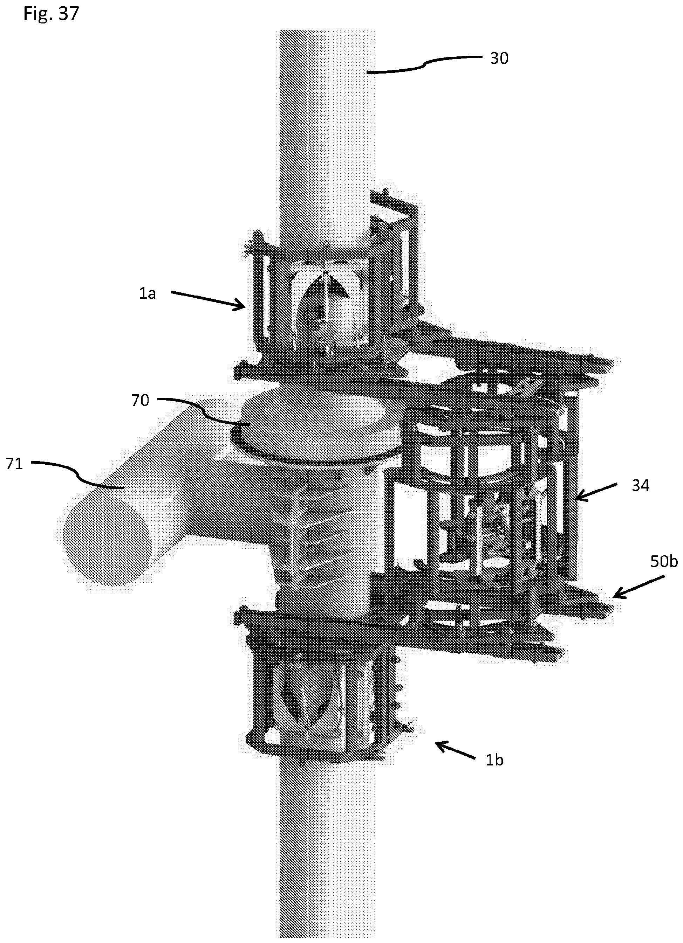

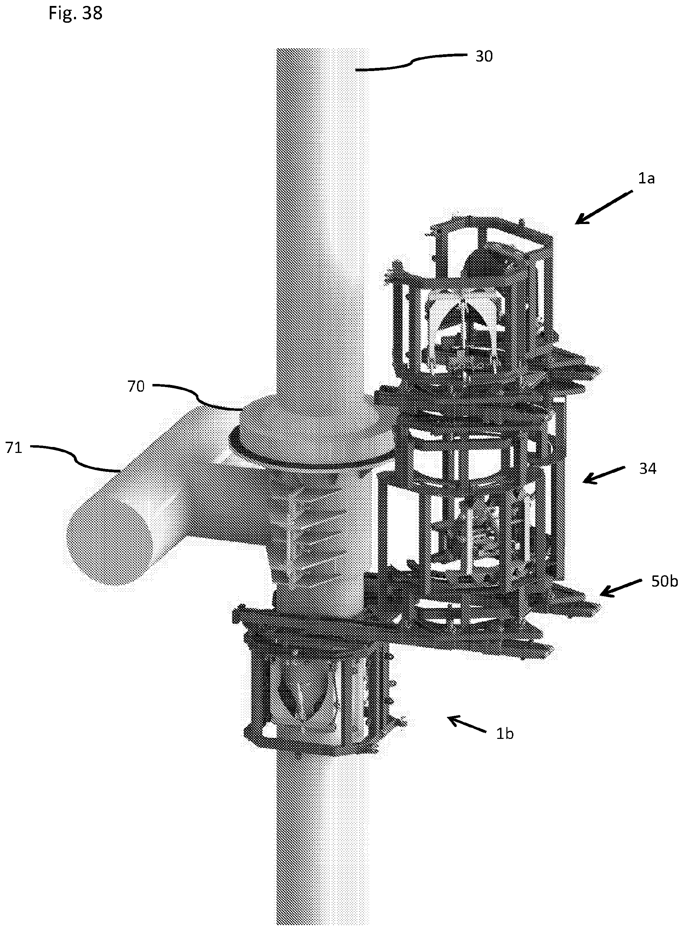

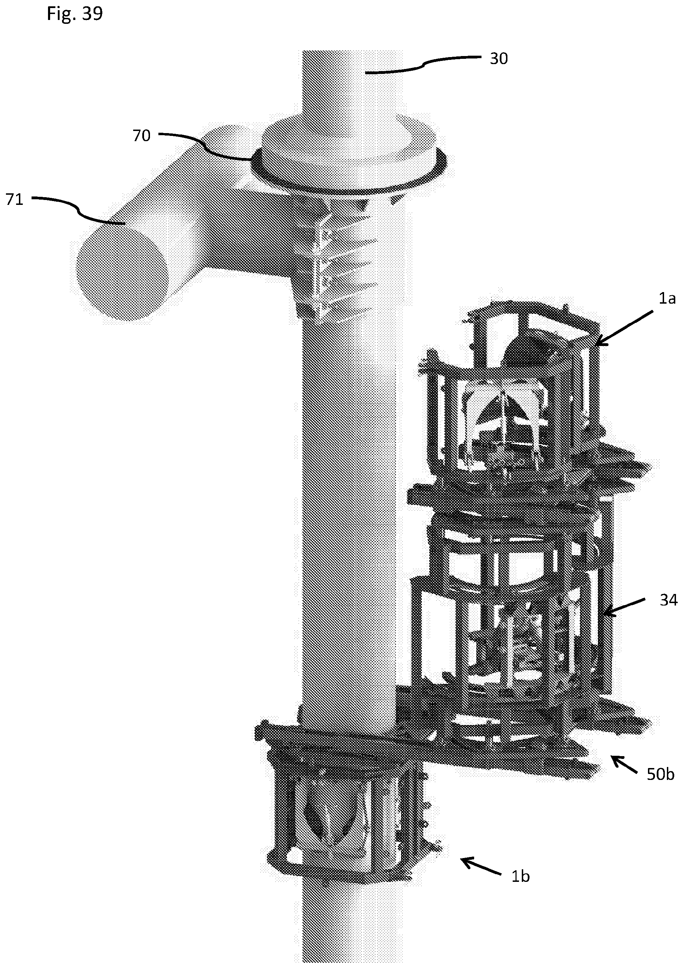

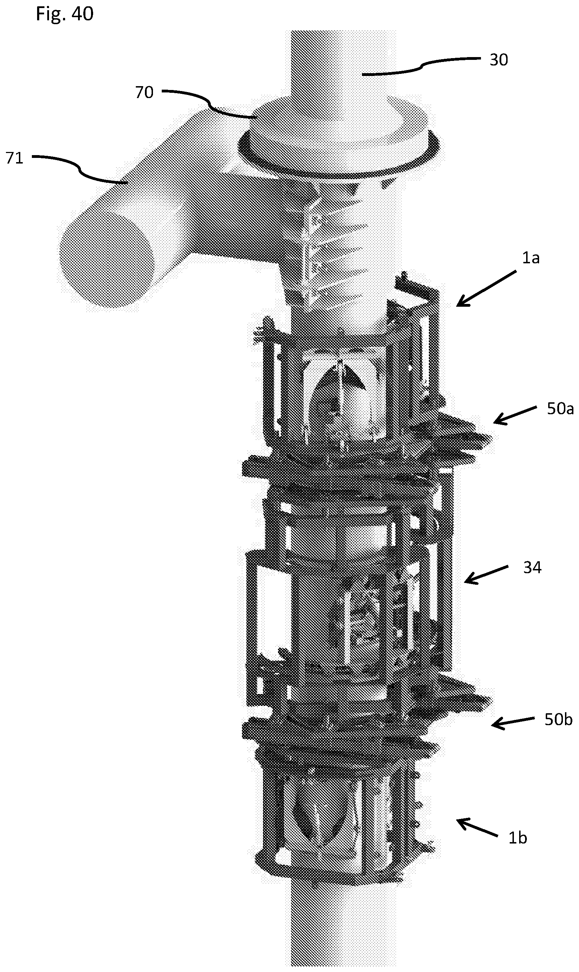

A first embodiment of the present invention will now be described with reference to Figures 26-40. This embodiment is designed to be used with the hinged modules described above, in which each module comprises two or more of cage or frame segments 1a, 1b, 1c connected together with hinged connections, which may be opened such that the cage or frame 1 fits around the support structure 30 to be serviced and closed so as to secure the frame 1 around the structure 30, using a drive such as a hydraulic cylinder or an electric motor to open and close the cage or frame 1.

The first embodiment is also designed to be used with the examples described above with reference to Figures 23 and 24, in which multiple modules can be connected together in series along the structure, each module comprising a drive and/or servicing module.

Figures 26-29 show a bypass module 50 for connection in series between adjacent modules 1 so as to allow the drive and/or servicing modules 1, 34 to pass an obstacle on the structure to be serviced, including obstacles such as cross-braces that extend away from the structure. The module 50 comprises upper and lower pairs of slotted plates 52, 60 carrying respectively upward and downwardly projecting module attachment pins 51 for removable attachment to corresponding attachment parts (e.g. receptacles 36) of the drive and/or servicing modules respectively above and below the bypass module 50.

Between the upper and lower slotted plates 52, 60 are provided a pair of linear telescopic rails 61, arranged such that the upper slotted plates 52 can move linearly relative to the lower slotted plates 60. This linear movement is driven by a hydraulic ram 55 connected to a mounting block 56 connected to one end of the respective telescopic rail 61, although other drive means such as an electric or hydraulic motor with a linear drive connection may be used instead. The end of the rail 61 is protected by a bumper 62.

Each of the pairs of upper and lower slotted plates 52, 60 are pivotally mounted on a structure comprising stabiliser bars 58 and stabiliser plates 57, by means of load-bearing blocks 54 moveable within movement slots 53. There may be provided an anti-friction coating on the contact surfaces of the blocks 54 and slots 53.

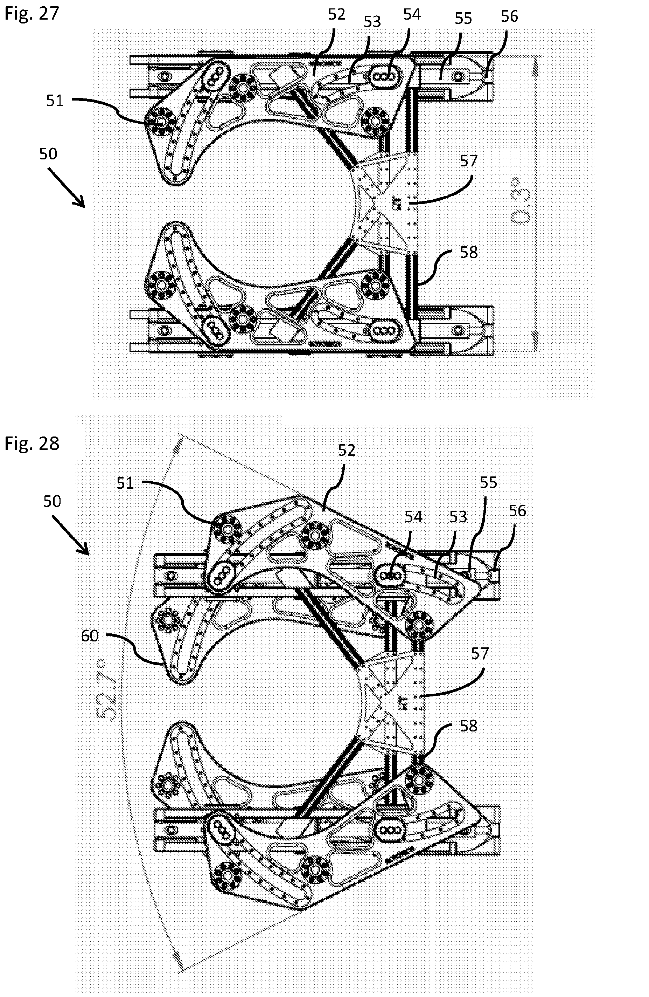

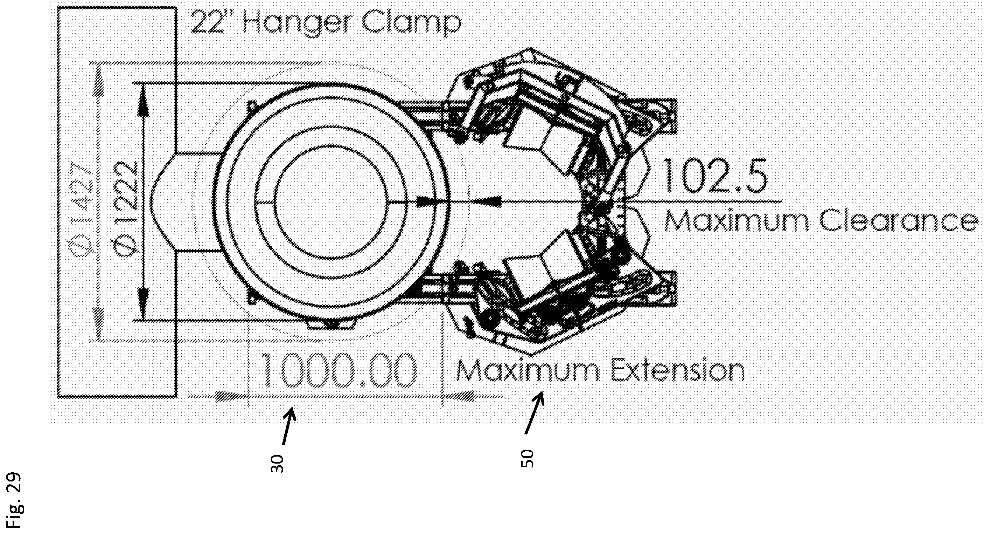

As shown in Figures 27 and 28, each pair of upper and lower slotted plates 52, 60 are able to pivot towards and away from each other in the manner of a pair of jaws or pincers. This pivoting movement follows the opening and closing movement of the module 1 to which the upper/lower plates 52, 60 are attached. In the example shown, each pair can open by up to approximately 53°. As shown in Figure 29, this allows the bypass module 50 to fit around a pipe or riser 30.

Modules 1 may be connected together via the bypass module 50 to form a train of modules 1. For example, the train may comprise in series:
- top drive or traction module 1a
- top bypass module 50a
- tool module 34
- bottom bypass module 50b
- bottom drive or traction module 1b

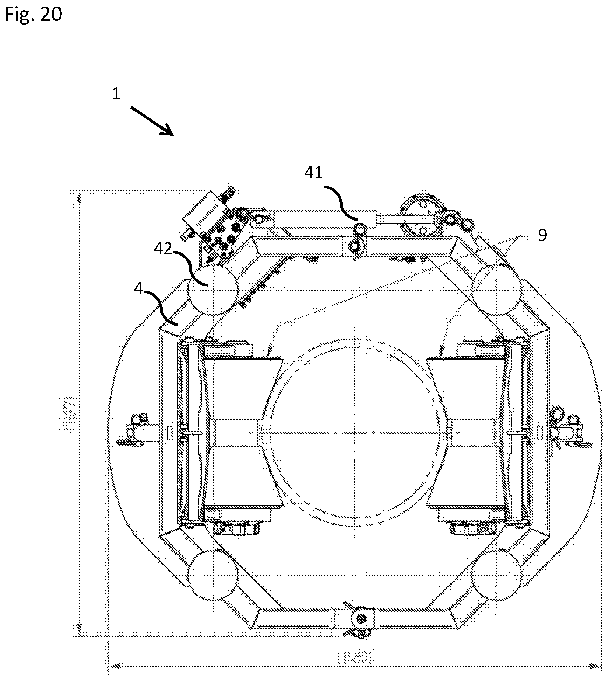

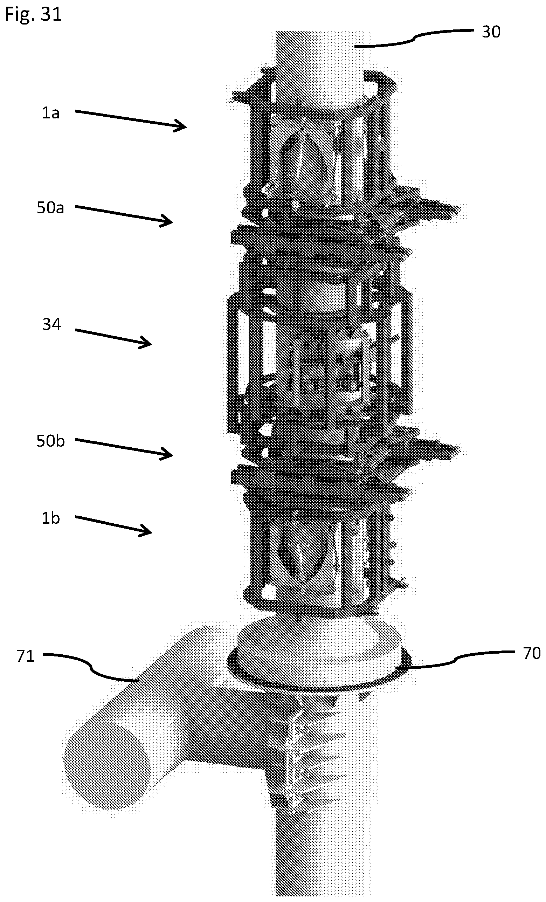

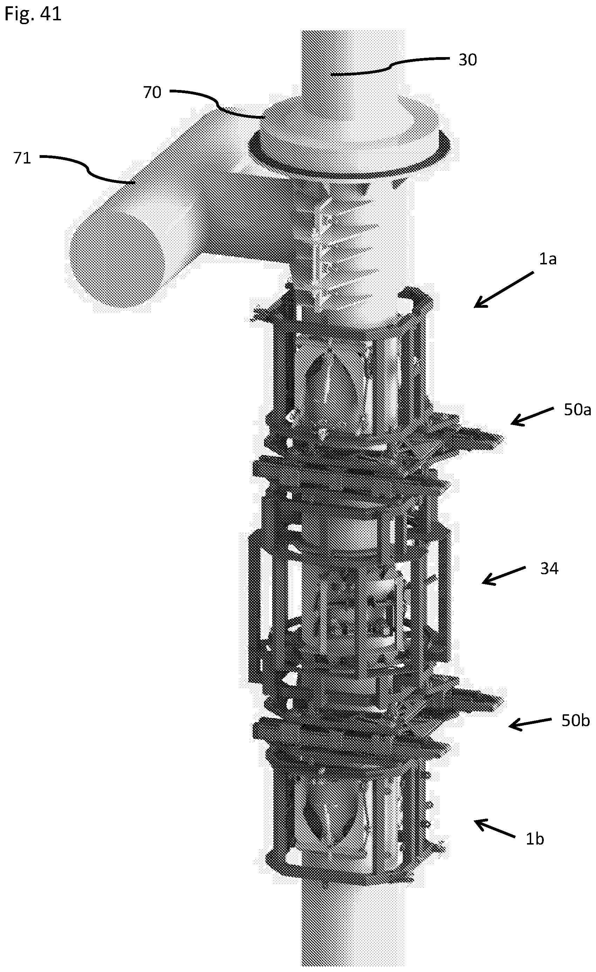

A method of operation of the train so as to pass an obstacle such as a cross-brace is shown in flow chart of Figure 20, in which steps S1 - S11 correspond respectively to Figures 31-41. Each of the drive modules 1a, 1b and the tool module 34 can be opened and closed independently of each other, driven by their respective drive means such as a hydraulic ram or electric motor. Each of the top and bottom bypass modules 50a, 50b are able to move their connected drive and/or servicing modules linearly relative to one another by extending or retracting the telescopic rails 61, driven by the respective hydraulic ram 5. The opening, closing, driving, extending and retracting steps may be controlled manually, automatically or semi-automatically, for example by means of remote control unit 25 and/or controller 26 with the position and state of the modules being detected by one or more sensors and/or by visual inspection.

At step S1, the train is located on a riser 30 just above a clamp 70 to which a cross-brace 71 is attached. In this state, both the drive modules 1a, 1b and tool module 34 are closed around the pipe 30. At step S2, the bottom traction module 1b and the tool module 34 are opened. At step S3, the top bypass module 50 is extended so that the tool module 34 and bottom drive module 1b are moved linearly away from the riser 30 and the clamp 70.

At step S4, the top drive module 1a drives the train down the pipe 30, so that the bottom drive module 1b is past the clamp 70. At step S5, the bottom bypass module 50b extends so that the bottom drive module 1b is positioned around the riser 30. At step S6, the bottom drive module 1b closes around the riser 30.

At step S7, the top drive module 1a opens. At step S8, the top bypass module 50a retracts so that the top drive module 1a moves away from the riser 30. At step S9, the bottom drive module 1b drives the train down the riser 30 so that the top bypass module 50a and tool module 34 move past the clamp 70. At step S10, the bottom bypass module 50b retracts so as to move the top drive module 1a and tool module 34 back onto the riser 30. Finally, at step S11 the top drive module 1a and tool module 34 close onto the riser 30. The train can then be driven further down the riser 30.

Hence, by the addition of the top and bottom bypass modules 50a, 5b, the drive modules 1a, 1b and tool module 34 are able to bypass obstructions such as clamp 70.

Alternative train configurations may be used, with a similar method of operation. For example, one or more additional tool modules or drive modules may be added, and combined tool and driving modules may be used. One or more dolly wheel modules may be added at one or both ends of the train, with non-driven wheels that are arranged to contact the support 30; this provides greater stability against moments exerted by the bypass module(s) 50.

In some embodiments, for example where the bypass module 50 has a greater length along the structure than the obstacle, the train may comprise first and second drive modules 1a, 1b, at least one of which is also configured as a tool module, connected together in series by a single bypass module 50. In this case, the first drive module 1a is opened, moved away from the structure by the bypass module 50, and driven past the obstacle by the second drive module 1b. The first drive module 1b is then moved towards the structure by the bypass module 50 and closes around the structure. The second drive module 1b is then opened, moved away from the structure by the bypass module 50, and driven past the obstacle by the first drive module 1b. The second drive module 1b is then moved towards the structure by the bypass module 50 and closes around the structure.

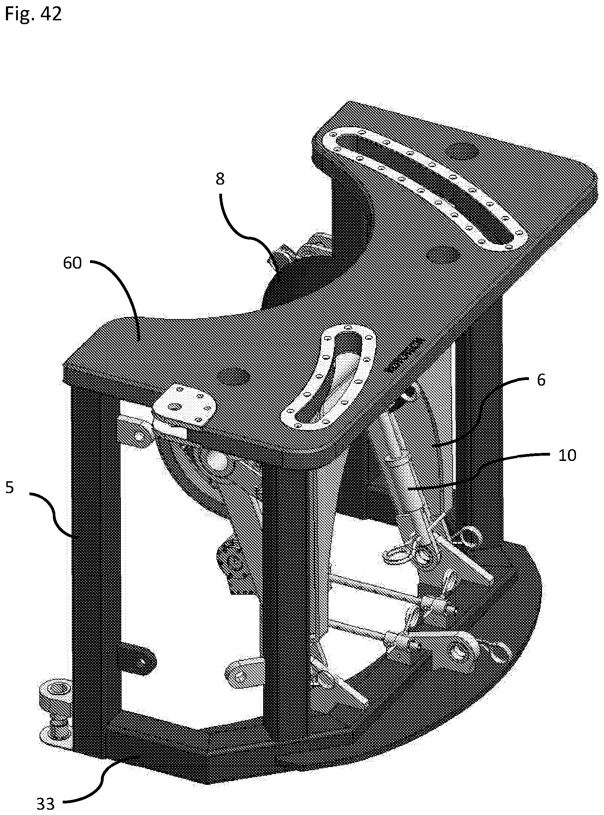

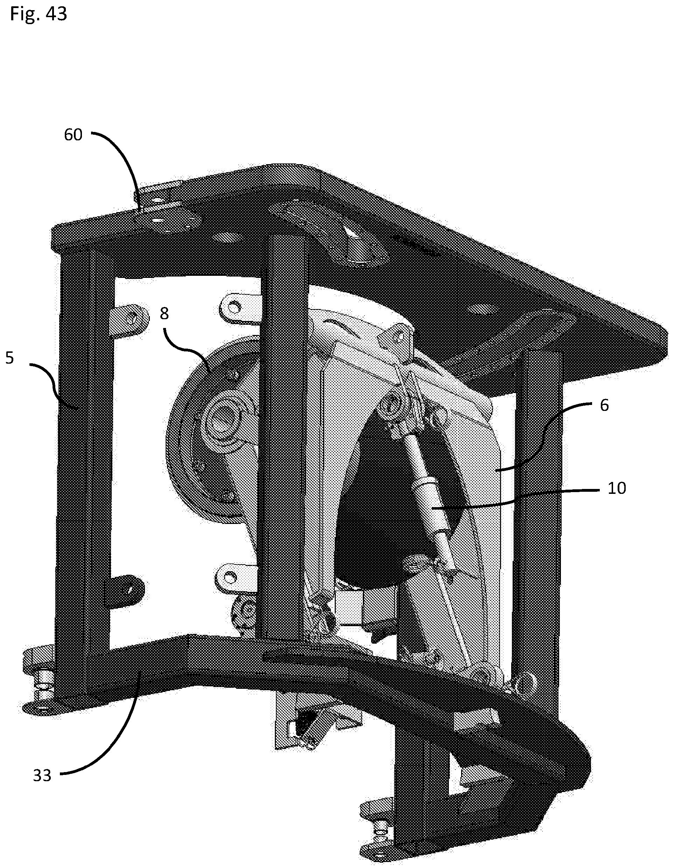

The first embodiment provides a bypass module 50 for use with existing drive and/or servicing modules 1, 34 such as in the examples above. However, in alternative embodiments some of the components or functions of the bypass module 50 may be integrated into the drive and/or servicing modules 1, 34. For example, Figures 42 and 43 show a section of an upper half of a drive module 1 in a second embodiment in which at least one of the slotted plate(s) 52, 60 form the upper and/or lower supports 3, 4. This reduces the weight of the train since there is no need to provide separate slotted plates 52, 60 and upper/lower supports 3, 4, or pins 51. Additionally, the connection between modules may be made stronger.

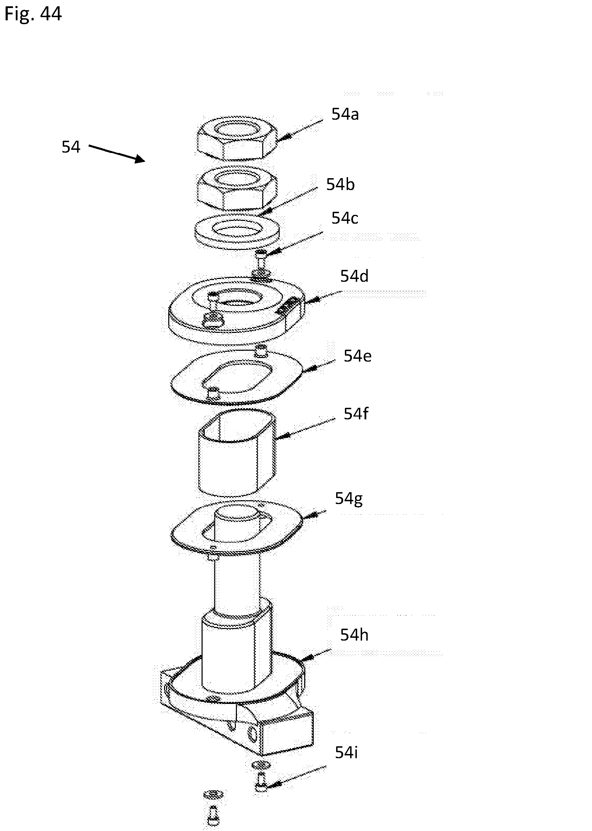

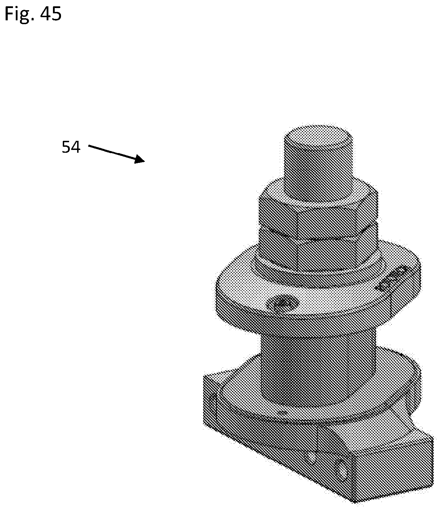

In the second embodiment, the bypass module 50 consists only of the telescopic rails 61, hydraulic ram 55 and stabiliser plates 57 and bars 58, together with pins or blocks 54 that fit within slots 53 within the slotted plates 52, 60 of the drive and/or servicing module 1, 34 above or below and are secured within the slots 53 by removable caps, as shown for example in Figures 44 and 45 in which the pin or block 54 comprises a nut and bolt type fixing with nylon bushes to reduce friction against the corresponding slot 53.

The parts of the pin or block 54 are labelled in Figure 44 as follows:
- 54a: M30 half nut (x2)
- 54b: M30 narrow washer
- 54c: Fastener securing top nylon bush (x2)
- 54d: Top load spreader
- 54e: Top nylon but
- 54f: Slot nylon bush
- 54g: Bottom nylon bush
- 54h: Bottom load spreader M30 pin
- 54i: Fastener securing bottom nylon bush (x2)

A combination of modules 1, 34 according to the first and second embodiments may be used together in the same train, by using a bypass module 50 having a slotted plate 52, 60 and pins 51 on one side for connection to the upper/lower supports 3, 4 of a drive and/or servicing module 1, 34, and with telescopic rails 61 on the other side connected or connectable directly to a drive and/or servicing module 1, 34 having an integrated slotted plate 52, 60 on that side. Hence, there may be provided a hybrid bypass module 50 having one side as in the first embodiment and another side according to the second embodiment.

Alternative embodiments of the invention, which may be apparent to the skilled person on reading the above description, may fall within the scope of the invention as defined by the accompanying claims.

## Claims

1. Apparatus for servicing an elongate structure (30), comprising a bypass module (50) connected in series along the structure (30) between a first drive (1a) module and a second drive (1b) and/or servicing module (34), each of which may be selectively closed around the structure (30) or opened to enable removal from the structure (30), wherein the bypass module (50) is actuable to move the first (1a) and second (1b) modules relative to each other in a perpendicular direction to the elongate structure (30) towards or away from the elongate structure (30), so that the second module (1b) is moved in the perpendicular direction away from the structure (30) while the first module (1a) is closed around the structure (30) and the first module (1a) is drivable along the elongate structure (30) so as to drive the second module (1b) past an obstruction on the elongate structure (30).

2. Apparatus of claim 1, wherein the bypass module (50) comprises first and/or second mounts for removable connection respectively to the first (1a) and second (1b) drive and/or servicing modules (34).

3. Apparatus of claim 2, wherein the first and/or second mounts are movable so as to allow the first (1a) and/or second (1b) drive and/or servicing modules (34) to open and close.

4. Apparatus of claim 2 or claim 3, wherein the first and/or second mounts are movable linearly to move the first (1a) and second modules (1b) relative to each other in the direction towards and away from the structure (30).

5. Apparatus of claim 1, wherein at least one of the first (1a) and second (1b) drive and/or servicing modules (34) has a slotted plate (52, 60) at an end thereof, and the bypass module (50) is removably connected to said slotted plate (52, 60) by one or more block or pin (54) slidably mounted within a corresponding slot (53) in the slotted plate (52, 60) so as to allow the drive (1a, 1b) and/or servicing module (34) to open and close.

6. Apparatus of any preceding claim, wherein the bypass module (50) comprises one or more telescopic rails (61) for moving the first (1a) and second (1b) modules relative to each other in the direction towards and away from the structure (30).

7. Apparatus of any preceding claim including said first (1a) and second (1b) drive and/or servicing modules (34) each including means for actuating the opening and/or closing of the respective drive and/or servicing module (34).

8. Apparatus of any preceding claim, wherein the first (1a) and second (1b) drive and/or servicing modules (34) each comprise a cage or frame (1) comprising two or more segments or sections moveably or pivotably connected together.

9. Apparatus of any preceding claim, wherein the or each said drive module (1a, 1b) includes one or more rotating members arranged to contact the elongate structure (30) and drivable so as to drive the drive module (1a, 1b) along the structure.

10. Apparatus of any preceding claim, wherein the or each said servicing module (34) includes one or more tools for servicing the structure (30).

11. Apparatus of any preceding claim, wherein the first (1a) and second (1b) drive and/or servicing modules (34) are connected together in series along the structure (30) via a first said bypass module (50), and a third drive (1c) and/or servicing module (34) is connected in series along the structure (30) to the second drive (1b) and/or servicing module (34) via a second bypass module (50) actuable to move the second (1b) and third (1c) modules relative to each other in a perpendicular direction towards or away from the elongate structure (30).

12. A method of operation of the apparatus of claim 11, wherein the first module (1a) is adjacent an obstacle on the elongate structure (30), the first (1a) and third (1c) modules each comprise at least a drive module and the second (1b) module comprises at least a servicing module, the method comprising:
a) opening (S2) the first and second drive (1b) and/or servicing modules (34);
b) actuating (S3) the second bypass module to move the first (1a) and second (1b) drive and/or servicing modules (34) away from the structure (30);
c) driving (S4) the first (1a) and second (1b) drive and/or servicing modules (34) past the obstacle by driving the third module (1c);
d) actuating (S5) the first bypass module (50) to move the first (1a) drive and/or servicing module (34) towards the structure (30);
e) closing (S6) the first drive (1a) and/or servicing module (34) around the structure (30);
f) opening (S7) the third drive (1c) and/or servicing module (34);
g) actuating (S8) the bypass module (50) to move the third drive (1c) and/or servicing module (34) away from the structure (30);
h) driving (S9) the third drive (1c) and/or servicing module (34) past the obstacle;
i) actuating (S10) the first bypass module (50) to move the second (1b) and third (1c) drive and/or servicing module (34) towards the structure (30); and
j) closing (S11) the second (1b) and third (1c) drive and/or servicing module (34) around the structure (30).

13. A method of operation of the apparatus of any one of claims 1 to 10, wherein the first (1a) and second (1b) drive and/or servicing modules (34) are connected together in series along the structure (30) via the bypass module (50), the first module (1a) is adjacent an obstacle on the elongate structure (30) and the first (1a) and second (1b) modules each comprise a drive module, the method comprising:
a) opening the first module (1a);
b) actuating the bypass module (50) to move the first module (1a) away from the structure (80);
c) driving the first module (1a) past the obstacle by driving the second module (1b);
d) actuating the bypass module (50) to move the first module (1a) towards the structure (30);
e) closing the first module (1a) around the structure (30);
f) opening the second module (1b);
g) actuating the bypass module (50) to move the second module (1b)away from the structure (80);
h) driving the second module (1b) past the obstacle by driving the first module (1a);
i) actuating the bypass module (50) to move the second module (1b) towards the structure (30); and
j) closing the second module (1b) around the structure (30).

## Patentansprüche

1. Vorrichtung zum Warten einer länglichen Konstruktion (30), die ein Überbrückungsmodul (50) umfasst, das entlang der Konstruktion (30) zwischen einem ersten Fahrmodul (1a) und einem zweiten Fahr- (1b) und/oder Wartungsmodul (34), von denen sich jedes gezielt um die Konstruktion (30) herum schließen oder öffnen lässt, um ein Lösen von der Konstruktion (30) zu ermöglichen, in Reihe verbunden ist, wobei sich das Überbrückungsmodul (50) zwecks Bewegens des ersten (1a) und des zweiten (1b) Moduls in Bezug zueinander in einer senkrechten Richtung zu der länglichen Konstruktion (30) zu der länglichen Konstruktion (30) hin oder von dieser weg betätigen lässt, so dass das zweite Modul (1b) in der senkrechten Richtung von der Konstruktion (30) weg bewegt wird, während das erste Modul (1a) um die Konstruktion (30) herum geschlossen ist, und das erste Modul (1a) an der länglichen Konstruktion (30) entlangfahren kann und so das zweite Modul (1b) an einem Hindernis an der länglichen Konstruktion (30) vorbeifährt.

2. Vorrichtung nach Anspruch 1, wobei das Überbrückungsmodul (50) ein erstes und/oder ein zweites Montageelement für das lösbare Verbinden mit dem ersten (1a) beziehungsweise dem zweiten (1b) Fahr- und/oder Wartungsmodul (34) umfasst.

3. Vorrichtung nach Anspruch 2, wobei das erste und/oder das zweite Montageelement beweglich ist, so dass sich das erste (1a) und/oder das zweite (1b) Fahr- und/oder Wartungsmodul (34) öffnen und schließen kann.

4. Vorrichtung nach Anspruch 2 oder 3, wobei das erste und/oder das zweite Montageelement linear beweglich ist und so das erste (1a) und das zweite Modul (1b) in Bezug zueinander in Richtung zu der Konstruktion (30) hin und von ihr weg bewegt.

5. Vorrichtung nach Anspruch 1, wobei das erste (1a) und/oder das zweite (1b) Fahr- und/oder Wartungsmodul (34) an einem Ende eine Schlitzplatte (52, 60) aufweist und das Überbrückungsmodul (50) über einen oder mehrere Blöcke oder Stifte (54), der verschiebbar in einem entsprechenden Schlitz (53) in der Schlitzplatte (52, 60) montiert ist, lösbar mit der Schlitzplatte (52, 60) verbunden ist, so dass sich das Fahr- (1a, 1b) und/oder das Wartungsmodul (34) öffnen und schließen kann.

6. Vorrichtung nach einem der vorhergehenden Ansprüche, wobei das Überbrückungsmodul (50) eine oder mehrere Teleskopschienen (61) zum Bewegen des ersten (1a) und des zweiten (1b) Moduls in Bezug zueinander in Richtung zu der Konstruktion (30) hin und von dieser weg umfasst.

7. Vorrichtung nach einem der vorhergehenden Ansprüche mit dem ersten (1a) und dem zweiten (1b) Fahr- und/oder Wartungsmodul (34), die jeweils Mittel zum Veranlassen des Öffnens und/oder Schließens des jeweiligen Fahr- und/oder Wartungsmoduls (34) aufweisen.

8. Vorrichtung nach einem der vorhergehenden Ansprüche, wobei das erste (1a) und das zweite (1b) Fahr- und/oder Wartungsmodul (34) jeweils einen Käfig oder Rahmen (1) umfassen, der zwei oder mehrere Segmente oder Abschnitte umfasst, die beweglich oder schwenkbar miteinander verbunden sind.

9. Vorrichtung nach einem der vorhergehenden Ansprüche, wobei das oder jedes Fahrmodul (1a, 1b) ein oder mehrere rotierende Elemente aufweist, die so angeordnet sind, dass sie die längliche Konstruktion (30) berühren, und verfahrbar sind, so dass sie das Fahrmodul (1a, 1b) an der Konstruktion entlangfahren.

10. Vorrichtung nach einem der vorhergehenden Ansprüche, wobei das oder jedes Wartungsmodul (34) ein oder mehrere Werkzeuge zum Warten der Konstruktion (30) aufweist.

11. Vorrichtung nach einem der vorhergehenden Ansprüche, wobei das erste (1a) und das zweite (1b) Fahr- und/oder Wartungsmodul (34) über ein erstes genanntes Überbrückungsmodul (50) entlang der Konstruktion (30) in Reihe miteinander verbunden sind und ein drittes Fahr- (1c) und/oder Wartungsmodul (34) über ein zweites Überbrückungsmodul (50), das sich zwecks Bewegens des zweiten (1b) und des dritten (1c) Moduls in Bezug zueinander in senkrechter Richtung zu der länglichen Konstruktion (30) hin oder von ihr weg betätigen lässt, entlang der Konstruktion (30) in Reihe mit dem zweiten Fahr- (1b) und/oder Wartungsmodul (34) verbunden ist.

12. Verfahren zum Betreiben der Vorrichtung nach Anspruch 11, wobei das erste Modul (1a) neben einem Hindernis an der länglichen Konstruktion (30) liegt, wobei das erste (1a) und das dritte (1c) Modul jeweils zumindest ein Fahrmodul umfassen und das zweite (1b) Modul zumindest ein Wartungsmodul umfasst, wobei das Verfahren Folgendes umfasst:
a) Öffnen (S2) des ersten und des zweiten Fahr- (1b) und/oder Wartungsmoduls (34),
b) Betätigen (S3) des zweiten Überbrückungsmoduls zwecks Bewegens des ersten (1a) und des zweiten (1b) Fahr- und/oder Wartungsmoduls (34) von der Konstruktion (30) weg,
c) Vorbeifahren (S4) des ersten (1a) und des zweiten (1b) Fahr- und/oder Wartungsmoduls (34) an dem Hindernis durch Verfahren des dritten Moduls (1c),
d) Betätigen (S5) des ersten Überbrückungsmoduls (50) zwecks Bewegens des ersten (1a) Fahr- und/oder Wartungsmoduls (34) zu der Konstruktion (30) hin,
e) Schließen (S6) des ersten Fahr- (1a) und/oder Wartungsmoduls (34) um die Konstruktion (30) herum,
f) Öffnen (S7) des dritten Fahr- (1c) und/oder Wartungsmoduls (34),
g) Betätigen (S8) des Überbrückungsmoduls (50) zwecks Bewegens des dritten Fahr- (1c) und/oder Wartungsmoduls (34) von der Konstruktion (30) weg,
h) Vorbeifahren (S9) des dritten Fahr- (1c) und/oder Wartungsmoduls (34) an dem Hindernis,
i) Betätigen (S10) des ersten Überbrückungsmoduls (50) zwecks Bewegens des zweiten (1b) und des dritten (1c) Fahr- und/oder Wartungsmoduls (34) zu der Konstruktion (30) hin und
j) Schließen (S11) des zweiten (1b) und des dritten (1c) Fahr- und/oder Wartungsmoduls (34) um die Konstruktion (30) herum.

13. Verfahren zum Betreiben der Vorrichtung nach einem der Ansprüche 1 bis 10, wobei das erste (1a) und das zweite (1b) Fahr- und/oder Wartungsmodul (34) über das Überbrückungsmodul (50) entlang der Konstruktion (30) in Reihe miteinander verbunden sind, wobei das erste Modul (1a) neben einem Hindernis an der länglichen Konstruktion (30) liegt und das erste (1a) und das zweite (1b) Modul jeweils ein Fahrmodul umfassen, wobei das Verfahren Folgendes umfasst:
a) Öffnen des ersten Moduls (1a),
b) Betätigen des Überbrückungsmoduls (50) zwecks Bewegens des ersten Moduls (1a) von der Konstruktion (80) weg,
c) Vorbeifahren des ersten Moduls (1a) an dem Hindernis durch Verfahren des zweiten Moduls (1b),
d) Betätigen des Überbrückungsmoduls (50) zwecks Bewegens des ersten Moduls (1a) zu der Konstruktion (30) hin,
e) Schließen des ersten Moduls (1a) um die Konstruktion (30) herum,
f) Öffnen des zweiten Moduls (1b),
g) Betätigen des Überbrückungsmoduls (50) zwecks Bewegens des zweiten Moduls (1b) von der Konstruktion (80) weg,
h) Vorbeifahren des zweiten Moduls (1b) an dem Hindernis durch Verfahren des ersten Moduls (1a),
i) Betätigen des Überbrückungsmoduls (50) zwecks Bewegens des zweiten Moduls (1b) zu der Konstruktion (30) hin und
j) Schließen des zweiten Moduls (1b) um die Konstruktion (30) herum.

## Revendications

1. Appareil d'entretien d'une structure allongée (30), comportant un module de dérivation (50) raccordé en série le long de la structure (30) entre un premier (1a) module d'entraînement et un deuxième (1b) module d'entraînement et/ou d'entretien (34), chacun d'entre eux pouvant, de manière sélective, être fermé autour de la structure (30) ou ouvert pour permettre le retrait en provenance de la structure (30), dans lequel le module de dérivation (50) est en mesure d'être actionné pour déplacer les premier (1a) et deuxième (1b) modules l'un par rapport à l'autre dans une direction perpendiculaire par rapport à la structure allongée (30) pour les rapprocher ou les éloigner de la structure allongée (30), de telle sorte que le deuxième (1b) module est déplacé dans la direction perpendiculaire pour l'éloigner de la structure (30) tandis que le premier (1a) module est fermé autour de la structure (30) et le premier (1a) module est en mesure d'être entraîné le long de la structure allongée (30) de manière à entraîner le deuxième (1b) module au-delà d'une obstruction sur la structure allongée (30).

2. Appareil selon la revendication 1, dans lequel le module de dérivation (50) comporte des premier et/ou deuxième supports pour un raccordement amovible respectivement aux premier (1a) et deuxième (1b) modules d'entraînement et/ou d'entretien (34).

3. Appareil selon la revendication 2, dans lequel les premier et/ou deuxième supports sont mobiles de manière à permettre aux premier (1a) et/ou deuxième (1b) modules d'entraînement et/ou d'entretien (34) de s'ouvrir et de se fermer.

4. Appareil selon la revendication 2 ou la revendication 3, dans lequel les premier et/ou deuxième supports sont mobiles de manière linéaire pour déplacer les premier (1a) et deuxième (1b) modules l'un par rapport à l'autre dans la direction permettant de les rapprocher et de les éloigner de la structure (30).

5. Appareil selon la revendication 1, dans lequel au moins l'un des premier (1a) et deuxième (1b) modules d'entraînement et/ou d'entretien (34) a une plaque fendue (52, 60) au niveau d'une extrémité de celui-ci, et le module de dérivation (50) est raccordé de manière amovible à ladite plaque fendue (52, 60) par un ou plusieurs blocs ou broches (54) montés de manière coulissante dans une fente correspondante (53) dans la plaque fendue (52, 60) de manière à permettre aux modules d'entraînement (1a, 1b) et/ou d'entretien (34) de s'ouvrir et de se fermer.

6. Appareil selon l'une quelconque des revendications précédentes, dans lequel le module de dérivation (50) comporte un ou plusieurs rails télescopiques (61) servant à déplacer les premier (1a) et deuxième (1b) modules l'un par rapport à l'autre dans la direction permettant de les rapprocher et de les éloigner de la structure (30).

7. Appareil selon l'une quelconque des revendications précédentes, comprenant lesdits premier (1a) et deuxième (1b) modules d'entraînement et/ou d'entretien (34), chacun comprenant un moyen servant à actionner l'ouverture et/ou la fermeture du module d'entraînement et/ou d'entretien (34) respectif.

8. Appareil selon l'une quelconque des revendications précédentes, dans lequel les premier (1a) et deuxième (1b) modules d'entraînement et/ou d'entretien (34) comportent chacun une cage ou un cadre (1) comportant deux segments ou sections ou plus raccordés ensemble de manière mobile ou pivotante.

9. Appareil selon l'une quelconque des revendications précédentes, dans lequel ledit ou chaque dit module d'entraînement (1a, 1b) comprend un ou plusieurs éléments rotatifs agencés pour se mettre en contact avec la structure allongée (30) et en mesure d'être entraînés de manière à entraîner le module d'entraînement (1a, 1b) le long de la structure.

10. Appareil selon l'une quelconque des revendications précédentes, dans lequel ledit ou chaque dit module d'entretien (34) comprend un ou plusieurs outils servant à l'entretien de la structure (30).

11. Appareil selon l'une quelconque des revendications précédentes, dans lequel les premier (1a) et deuxième (1b) modules d'entraînement et/ou d'entretien (34) sont raccordés ensemble en série le long de la structure (30) par le biais d'un premier dit module de dérivation (50), et un troisième (1c) module d'entraînement et/ou d'entretien (34) est raccordé en série le long de la structure (30) au deuxième (1b) module d'entraînement et/ou d'entretien (34) par le biais d'un deuxième module de dérivation (50) en mesure d'être actionné pour déplacer les deuxième (1b) et troisième (1c) modules l'un par rapport à l'autre dans une direction perpendiculaire pour les rapprocher ou les éloigner de la structure allongée (30).

12. Procédé de fonctionnement de l'appareil selon la revendication 11, dans lequel le premier (1a) module est adjacent à un obstacle sur la structure allongée (30), les premier (1a) et troisième (1c) modules comportent chacun au moins un module d'entraînement et le deuxième (1b) module comporte au moins un module d'entretien, le procédé comportant les étapes consistant à :
a) ouvrir (S2) les premier et deuxième (1b) modules d'entraînement et/ou d'entretien (34) ;
b) actionner (S3) le deuxième module de dérivation pour déplacer les premier (1a) et deuxième (1b) modules d'entraînement et/ou d'entretien (34) pour les éloigner de la structure (30) ;
c) entraîner (S4) les premier (1a) et deuxième (1b) modules d'entraînement et/ou d'entretien (34) au-delà de l'obstacle par l'entraînement du troisième (1c) module ;
d) actionner (S5) le premier module de dérivation (50) pour déplacer le premier (1a) module d'entraînement et/ou d'entretien (34) pour le rapprocher de la structure (30) ;
e) fermer (S6) le premier (1a) module d'entraînement et/ou d'entretien (34) autour de la structure (30) ;
f) ouvrir (S7) le troisième (1c) module d'entraînement et/ou d'entretien (34) ;
g) actionner (S8) le module de dérivation (50) pour déplacer le troisième (1c) module d'entraînement et/ou d'entretien (34) pour l'éloigner de la structure (30) ;
h) entraîner (S9) le troisième (1c) module d'entraînement et/ou d'entretien (34) au-delà de l'obstacle ;
i) actionner (S10) le premier module de dérivation (50) pour déplacer les deuxième (1b) et troisième (1c) module d'entraînement et/ou d'entretien (34) pour les rapprocher de la structure (30) ; et
j) fermer (S11) les deuxième (1b) et troisième (1c) modules d'entraînement et/ou d'entretien (34) autour de la structure (30).

13. Procédé de fonctionnement de l'appareil selon l'une quelconque des revendications 1 à 10, dans lequel les premier (1a) et deuxième (1b) modules d'entraînement et/ou d'entretien (34) sont raccordés ensemble en série le long de la structure (30) par le biais du module de dérivation (50), le premier (1a) module est adjacent à un obstacle sur la structure allongée (30) et les premier (1a) et deuxième (1b) modules comportent chacun un module d'entraînement, le procédé comportant les étapes consistant à :
a) ouvrir le premier (1a) module ;
b) actionner le module de dérivation (50) pour déplacer le premier (1a) module pour l'éloigner de la structure (80) ;
c) entraîner le premier (1a) module au-delà de l'obstacle par l'entraînement du deuxième (1b) module ;
d) actionner le module de dérivation (50) pour déplacer le premier (1a) module pour le rapprocher de la structure (30) ;
e) fermer le premier (1a) module autour de la structure (30) ;
f) ouvrir le deuxième (1b) module ;
g) actionner le module de dérivation (50) pour déplacer le deuxième (1b) module pour l'éloigner de la structure (80) ;
h) entraîner le deuxième (1b) module au-delà de l'obstacle par l'entraînement du premier (1a) module ;
i) actionner le module de dérivation (50) pour déplacer le deuxième (1b) module pour le rapprocher de la structure (30) ; et
j) fermer le deuxième (1b) module autour de la structure (30).
